(19) Europäisches Patentamt / European Patent Office / Office européen des brevets

(11) **EP 4 203 467 A1**

(12) **EUROPEAN PATENT APPLICATION**
published in accordance with Art. 153(4) EPC

(43) Date of publication:
**28.06.2023 Bulletin 2023/26**

(51) International Patent Classification (IPC):
**H04N 9/64** (2023.01)   **H04N 5/222** (2006.01)
**H04N 5/232** (2006.01)

(21) Application number: **21866434.0**

(22) Date of filing: **05.08.2021**

(52) Cooperative Patent Classification (CPC):
**H04N 5/222; H04N 9/64; H04N 23/60**

(86) International application number:
**PCT/JP2021/029150**

(87) International publication number:
**WO 2022/054474 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **08.09.2020   JP 2020150319**

(71) Applicant: **Sony Group Corporation
Tokyo 108-0075 (JP)**

(72) Inventors:
• **KANEKO, Tetsuo
  Tokyo 108-0075 (JP)**
• **TSUCHIYA, Takashi
  Tokyo 108-0075 (JP)**

(74) Representative: **D Young & Co LLP
120 Holborn
London EC1N 2DY (GB)**

(54)   **INFORMATION PROCESSING SYSTEM, INFORMATION PROCESSING METHOD, AND INFORMATION PROCESSING PROGRAM**

(57)   Provided are an information processing system, an information processing method, and an information processing program capable of easily performing processing related to Look in video production.

An information processing system includes: an information processing apparatus and at least one electronic device connectable with the information processing apparatus, in which the information processing apparatus manages a plurality of Look data sets each including Look basic data corresponding to each color expression and Look adjustment data for adjusting the Look basic data.

*FIG. 1*

EP 4 203 467 A1

**Description**

TECHNICAL FIELD

The present technology relates to an information processing system, an information processing method, and an information processing program.

BACKGROUND ART

When producing a video work such as a movie, it is common to unify Look within the work. Look is how colors and gradations are seen, and can also be said to be a visual style incorporating intention of a producer of the video work. Look data optimized for every display device (a liquid crystal TV, a projector, or the like) used when a user views a video work is required. This is because when the display device changes, brightness and color width (color gamut) that can be expressed are different.

CITATION LIST

PATENT DOCUMENTS

Patent Document 1: Japanese Patent Application Laid-Open No. 2014-233064
Patent Document 2: Japanese Patent Application Laid-Open No. 2012-231459

SUMMARY OF THE INVENTION

PROBLEMS TO BE SOLVED BY THE INVENTION

However, in a case where Look data is used in producing a video work, there is complexity or the like in using the Look data, and thus, improvement thereof is required for more efficient use.
The present technology has been made in view of such a point, and an object thereof is to provide an information processing system, an information processing method, and an information processing program capable of easily performing processing related to Look in video production.

SOLUTIONS TO PROBLEMS

In order to solve the above-described problem, a first technology is an information processing system including: an information processing apparatus and at least one electronic device connectable with the information processing apparatus, in which the information processing apparatus manages a plurality of Look data sets each including Look basic data corresponding to each color expression and Look adjustment data for adjusting the Look basic data.
Furthermore, a second technology is an information processing method including: managing a plurality of Look data sets each including Look basic data corresponding to each color expression and Look adjustment data for adjusting the Look basic data in an information processing apparatus connectable with at least one electronic device.
Moreover, a third technology is an information processing program causing a computer to execute an information processing method including: managing a plurality of Look data sets each including Look basic data corresponding to each color expression and Look adjustment data for adjusting the Look basic data in an information processing apparatus connectable with at least one electronic device.

BRIEF DESCRIPTION OF DRAWINGS

Fig. 1 is a block diagram illustrating a configuration of an information processing system 10.
Fig. 2 is a diagram illustrating an example of network connection of electronic devices.
Fig. 3 is a diagram illustrating roles of the electronic devices in video work production.
Fig. 4 is an explanatory diagram of a configuration of a Look data set.
Fig. 5 is an explanatory diagram of a Look data set, content, and scenes.
Fig. 6 is a block diagram illustrating a configuration of an information processing apparatus 100.

Fig. 7 is a block diagram illustrating a configuration of an imaging apparatus 200.

Fig. 8 is a block diagram illustrating a configuration of a display apparatus 300.

Fig. 9 is a block diagram illustrating a configuration of a setting apparatus 400.

Fig. 10 is a block diagram illustrating a configuration of an editing apparatus 500.

Fig. 11 is a diagram illustrating an outline of a workflow of video work production using the information processing system 10.

Fig. 12 is an explanatory diagram of transmission of a Look data set from the information processing apparatus 100 to the electronic devices.

Fig. 13 is an explanatory diagram of transmission of a Look data set from the information processing apparatus 100 to the electronic devices.

Fig. 14 is an explanatory diagram of Look processing.

Fig. 15 is an explanatory diagram of the Look processing.

Fig. 16 is an explanatory diagram of CDL processing.

Fig. 17 is an explanatory diagram of another example of the Look processing.

Fig. 18 is an explanatory diagram of a use example of a Look data set in pre-adjustment, Look component processing, and post-adjustment.

Fig. 19 is an explanatory diagram of variations of Look basic data in a 3D LUT format.

Fig. 20 is an explanatory diagram of special conversion.

Fig. 21A is a diagram illustrating a user account page in a UI, and Fig. 21B is a diagram illustrating a project management page in the UI.

Fig. 22 is a diagram illustrating a device registration page in the UI.

Fig. 23 is a diagram illustrating a device management page in the UI.

Fig. 24 is a diagram illustrating a device management page in a post-production stage in the UI.

Fig. 25 is an explanatory diagram of processing in a case where a Look data set is adjusted by a plurality of electronic devices.

Fig. 26 is a diagram illustrating a Look setting page in the UI.

Fig. 27A is a diagram illustrating a library search page in the UI, and Fig. 27B is a diagram illustrating a bookmark search page in the UI.

Fig. 28 is a diagram illustrating a specific example of a bookmark registration method.

Fig. 29 is a diagram illustrating a specific example of the bookmark registration method.

Fig. 30 is an explanatory diagram of real-time grading using the present technology.

Fig. 31 is an explanatory diagram of real-time grading using the present technology.

Fig. 32 is an explanatory diagram of real-time grading using the present technology.

Fig. 33 is an explanatory diagram of real-time grading using the present technology.

MODES FOR CARRYING OUT THE INVENTION

Hereinafter, an embodiment of the present technology will be described with reference to the drawings. Note that the description will be given in the following order.

<Embodiment>

[1. Description of Configuration]

[1-1. Configuration of Information Processing System 10]
[1-2. Configuration of Look Data Set]
[1-3. Configuration of Information Processing Apparatus 100]
[1-4. Configuration of Imaging Apparatus 200]
[1-5. Configuration of Display Apparatus 300]
[1-6. Configuration of Setting Apparatus 400]
[1-7. Configuration of Editing Apparatus 500]

[2. Description of Processing]

[2-1. Processing in Information Processing System 10]
[2-2. UI for Use of Information Processing System 10]

[2-3. Specific Examples of Use of Information Processing System 10: Real-time Grading]

<Modified Examples>

<Embodiment>

[1. Description of Configuration]

[1-1. Configuration of Information Processing System 10]

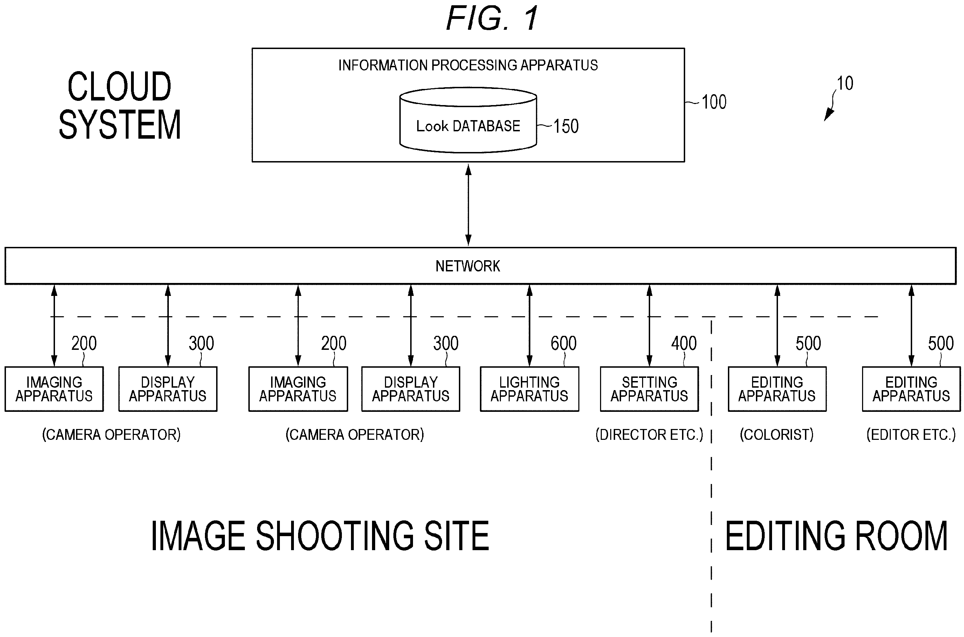

A configuration of an information processing system 10 according to the present technology will be described with reference to Fig. 1. The information processing system 10 includes an information processing apparatus 100, an imaging apparatus 200, a display apparatus 300, a setting apparatus 400, an editing apparatus 500, and a lighting apparatus 600. The imaging apparatus 200, the display apparatus 300, the setting apparatus 400, the editing apparatus 500, and the lighting apparatus 600 correspond to electronic devices in the claims.

The information processing apparatus 100 and the imaging apparatus 200, the display apparatus 300, and the setting apparatus 400 are connected via a network or the like. The information processing apparatus 100 operates in a server and the like, and performs management of a Look data set including storage and accumulation of the Look data set in a Look database 150 as a library, transmission of the Look data set to the imaging apparatus 200, the display apparatus 300, the setting apparatus 400, and the like in response to a transmission request, change of the Look data set, and the like.

The imaging apparatus 200 is used by an imaging person to image for producing a video work. The display apparatus 300 is for a camera operator and/or a staff other than the camera operator to confirm a video imaged by the imaging apparatus 200.

The setting apparatus 400 is used to be input by a user and to perform transmission to the information processing apparatus 100. Furthermore, the editing apparatus 500 is a device for performing post-production on an imaged video. The lighting apparatus 600 is a light or the like for applying light to a subject or the like at an image shooting site.

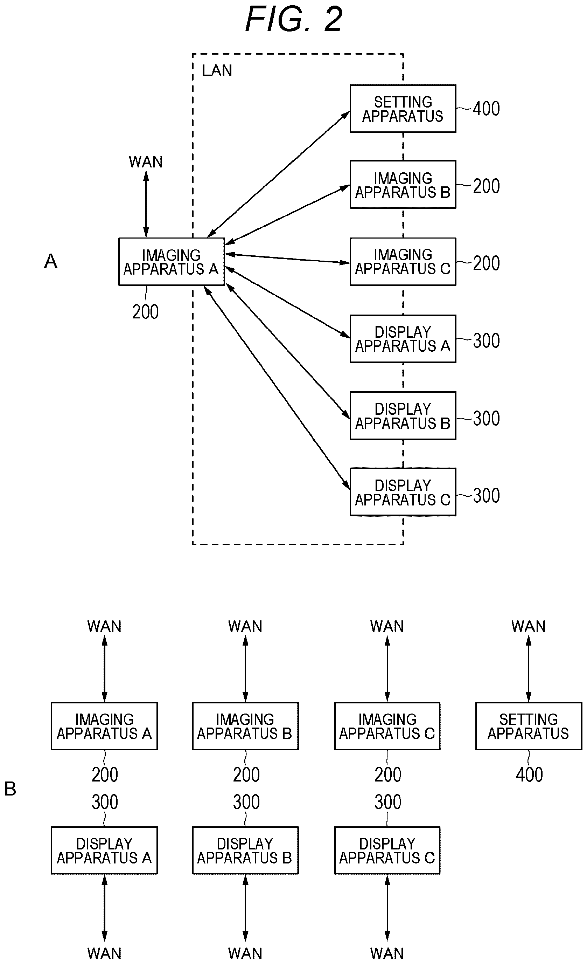

Fig. 2 illustrates a connection example of electronic devices at an image shooting site. Basically, all electronic devices need to be connected to a network in order to be connected to the information processing apparatus 100. Here, two representative examples are shown.

As illustrated in Fig. 2A, a first example is an example in which a local area network (LAN) is constructed by electronic devices at an image shooting site, and external Internet connection (wide area network (WAN)) is performed by using only one electronic device (the imaging apparatus 200 in Fig. 2) as an access point. Although the imaging apparatus 200 is the access point in Fig. 2A, any electronic device may be the access point. The LAN connection between the electronic devices at the site has an advantage that communication between the electronic devices can be performed at a high speed and a wide band. In addition, other than the electronic device serving as the access point, for example, only a WiFi function is required to be provided, and it is not necessary to individually contract with a WAN communication provider for each electronic device.

As illustrated in Fig. 2B, a second example is a configuration example in which all electronic devices are directly connected to an external network (WAN) (WAN configuration example). A connection configuration is simple, but it is necessary to contract with a WAN communication provider for each device so that communication can be made.

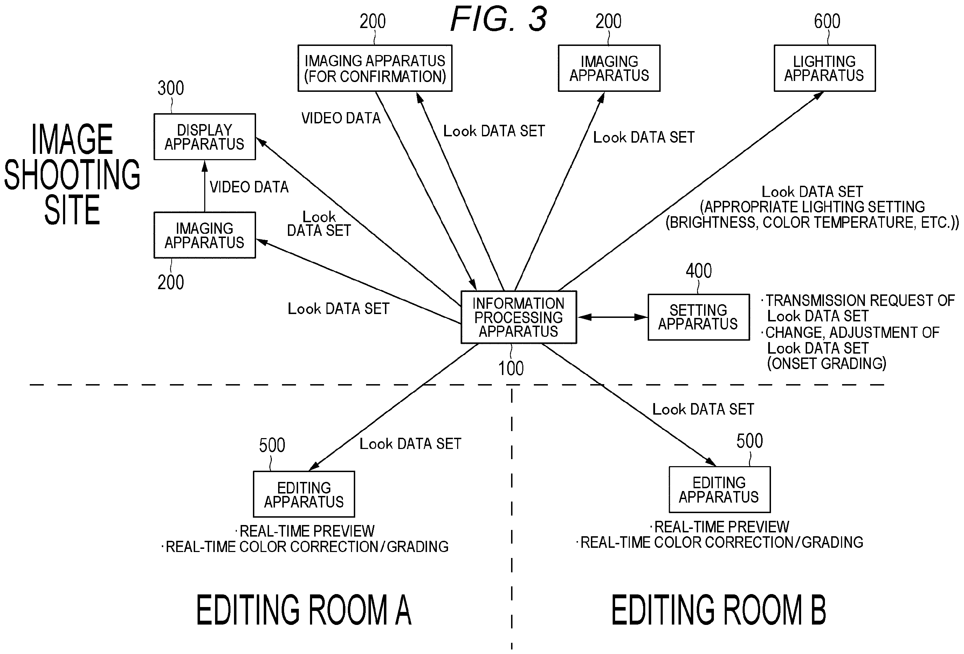

Next, with reference to Fig. 3, roles of electronic devices used for producing a video work will be described. Basically, a request or an instruction such as transmission, change, or adjustment of a Look data set to the information processing apparatus 100 is made from the setting apparatus 400. A device that requests and instructs transmission, change, adjustment, and the like of the Look data set in this manner is set as a master. In an example of Fig. 3, the setting apparatus 400 serves as the master. The change of the Look data set means that, in a case where an instruction to change the Look data set to a different Look data set is received from the imaging apparatus 200 and the like, the Look data set is re-selected according to the instruction, and a transmission request is made to the information processing apparatus 100, so that the Look data set is changed.

When a Look data set to be used by a user is determined and a transmission request of the Look data set is made from the setting apparatus 400 to the information processing apparatus 100, the Look data set is transmitted from the information processing apparatus 100 to the imaging apparatus 200, the display apparatus 300, the editing apparatus 500, and the lighting apparatus 600 via the network. Look adjustment (onset grading) can be performed in a UI of the setting apparatus 400. Look adjustment data in which adjustment contents of Look are recorded is also transmitted from the information processing apparatus 100 to each electronic device via the network in real time, and the Look adjustment is reflected in each electronic device.

Furthermore, even in a plurality of editing rooms away from the image shooting site, the Look data set is similarly transmitted to the image shooting site and the editing rooms almost simultaneously (in real time) via the network and synchronized. Furthermore, by designating one or a plurality of imaging apparatuses 200 among the plurality of imaging apparatuses 200 as an imaging apparatus for confirmation, a live view video of the imaging apparatus 200 for confirmation can be transmitted by streaming via a cloud system having a function of the information processing apparatus 100. If an apparatus can receive the streaming, such as a personal computer, the editing apparatus can confirm an imaged video at the image shooting site even while the imaging is being performed at the image shooting site (real-time preview).

In this case, video data of a Log video is usually streamed, and each of the received electronic devices applies the Look data set synchronized in the entire system to the video data. Furthermore, as will be described later, the master electronic device among the plurality of electronic devices can be freely changed in the plurality of electronic devices registered for every project. Therefore, for example, when the editing apparatus 500 in the editing room is set as the master, grading can be performed while confirming video data from the imaging apparatus 200 for confirmation in real time with grading software operating in the editing apparatus 500, and the Look data set adjusted there can be transmitted to all the registered devices in real time and reflected in each electronic device.

This makes it possible to perform grading in parallel in real time while performing imaging at the site. Note that it is also possible to automatically change lighting to an appropriate setting by adding, in association with the Look data set, information such as an appropriate lighting condition and the like to Look thereof and using the lighting apparatus 600 that can be controlled via the network.

Note that the above-described transmission of the Look data set, the Look adjustment data, the video data, and the like is not limited to real-time transmission during imaging or the like, and can be performed at any time after the imaging or the like.

Note that since the information processing system 10 only needs to include the information processing apparatus 100 that manages the Look data set and one or a plurality of electronic devices that receives the Look data set from the information processing apparatus 100, the imaging apparatus 200, the display apparatus 300, the setting apparatus 400, the editing apparatus 500, and the lighting apparatus 600 are not essential components. The information processing system 10 may include any one of the electronic devices and the information processing apparatus 100.

[1-2. Configuration of Look Data Set]

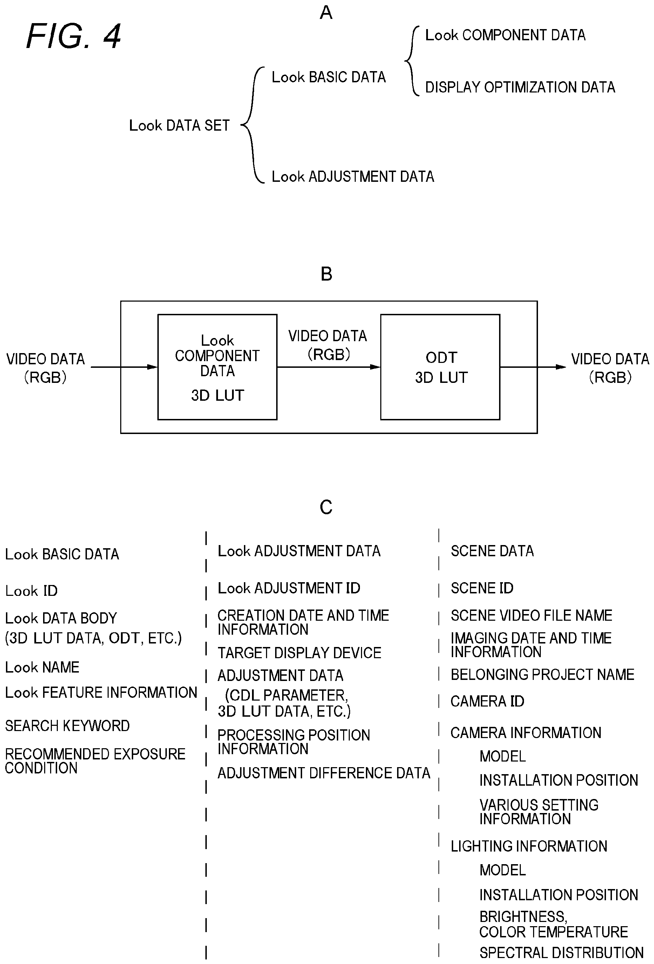

Fig. 4 illustrates a configuration of a Look data set used in the present technology. Data related to Look is transmitted from the Look database 150 to each electronic device in units of a Look data set. As illustrated in Fig. 4A, the Look data set includes Look basic data and Look adjustment data. Furthermore, the Look basic data includes Look component data and display optimization data, and the Look component data and the display optimization data can be managed separately.

Look is how colors and gradations are expressed, and can also be said to be a visual style incorporating intention of a person who produces a video work. When producing a video work such as a movie, it is common to unify and make Look consistent within the work. Furthermore, it is also necessary to optimize for every display device for viewing the video work. This is to realize the same Look within a range that can be expressed, though brightness and color width (color gamut) that can be expressed are different for every display device.

The Look component data is data in a 3D LUT format (.cube file, etc.) or a 1D LUT format applied to a Log material (imaged in a format such as S-Log3, S-Gamut3, etc.). The 1D LUT is common to RGB, and the 3D LUT applies different 1D LUTs to RGB. The Log material is a format in which an optical signal of a subject is faithfully recorded, and in order to adjust gradation and color gamut between imaging apparatuses, specifications thereof are commonly used. The Look component data is applied to the Log material. By using the 3D LUT data applied to the standardized Log material, even if any imaging apparatuses 200 having different manufacturers, models, versions, and the like are used, the same Look can be reproduced by applying the same Look data set to video data imaged in the format of the Log material.

The display optimization data is data for display optimization processing of optimizing Look for a display device that displays a video. The processing of optimizing for the display device is also referred to as output display transformation (ODT). A format of ODT data can be expressed by a combination of a 3D LUT and a 1D LUT, a combination of a 1D LUT and a matrix, and the like. Note that the processing may be performed separately on the video data as illustrated in Fig. 4B using the 3D LUT that is the Look component data and the 3D LUT that is the ODT data, or a relationship between input of the Look component data and output of the ODT data may be set as one 3D LUT.

The display optimization data is set for every display method of the display device, such as display optimization data for Rec.709 and display optimization data for HLG. By dividing the Look basic data into the Look component data and the display optimization data in this manner, one Look component data is common to a plurality of video data, and the display optimization data is prepared for various display devices. Therefore, it is possible to perform Look processing corresponding to various display devices by the combination of the Look component data and the display optimization data. The Look processing includes Look component processing and display optimization processing. Note that the Look component data and the display optimization data may be integrated in advance and used as one data without being separated.

As illustrated in Fig. 4C, the Look basic data includes a Look ID, a Look data body (3D LUT data, ODT data, etc.), a Look name, Look search feature information, a search keyword, recommended exposure condition information, lighting control information, lighting brightness information, color temperature information, and the like.

The Look ID is an identifier for identifying Look. The Look name is a name given to each Look in advance to identify the Look, and there is also a case where the Look name represents a feature of the Look. The Look search feature information is information indicating a feature of Look used to search the Look database 150 and specify a Look data set requested by a user. The search keyword is a character string related to Look used to search the Look database 150 and specify a Look data set requested by a user. Search of the Look data set in the Look database 150 will be described later. In a case where Look that is desired to be applied has been already determined at an image shooting site, for example, the recommended exposure condition information is information used to change brightness and the like of lighting at the site according to the Look. The lighting control information is information for controlling the lighting apparatus 600 in order to reproduce an appropriate lighting condition for Look. The lighting brightness information is information indicating brightness of a light source in the lighting apparatus 600 in order to reproduce an appropriate lighting condition for Look. The color temperature information is a scale (unit) expressing color of light emitted by the light source in the lighting apparatus 600 with a quantitative numerical value.

The Look adjustment data is data for adjusting Look. Look adjustment (onset grading) is generally performed by adjusting parameters (slope, offset, power, etc.) by a method called color decision list (CDL). In the present technology, a user can adjust Look applied to video data by using the Look basic data, but the Look basic data itself is not changed, and adjustment to Look is managed as adjustment data that is separate from the Look basic data. Note that there is a concept of changing a Look data set in production of a video work by using the present technology, but this is different from adjusting parameters of the Look data set, and refers to changing a Look data set used in each electronic device to another Look data set.

The Look adjustment data includes a Look adjustment ID, creation date and time information, target display device information, first adjustment data, adjustment target/position information, adjustment difference data information, and the like.

The Look adjustment ID is an identifier for identifying Look adjustment data. The creation date and time information is information indicating date and time when Look adjustment data has been created. The target display device information is, for example, information indicating a standard, a system, and the like of a display device for displaying video data (being a target of video data) such as Rec.709, DCI-P3, HLG, and PQ. The first adjustment data includes a CDL parameter, a 3D LUT, and the like, and is a first version of Look adjustment data. The adjustment target/position information indicates a position in processing (order in processing) at which Look is adjusted using Look adjustment data such as Look basic data before and after Look application. The adjustment difference data information indicates a difference between Look adjustment data generated by a change of Look adjustment data and Look adjustment data after the change.

Although the Look adjustment data is the data for adjusting Look, in a case where the adjustment has been performed a plurality of times, contents of the first adjustment are recorded as the Look adjustment data. Contents of the two or more adjustments do not adjust the Look adjustment data itself or are not recorded as new Look adjustment data, but are recorded as Look adjustment difference data that is data only of a difference between the adjustment contents. As a result, it is possible to prevent an increase in Look adjustment data capacity by repeating the adjustment. Moreover, in a case where there the plurality of adjustments has been performed, all the adjustment contents can be left by generating the Look adjustment difference data while leaving the Look adjustment data without overwriting new adjustment contents in the Look adjustment data, so that UNDO/REDO can be performed.

In video work production using the present technology, video data, a Look data set, an electronic device used for the video work production, and the like are managed using a mechanism called a project. Device information in the imaging apparatus 200, the display apparatus 300, and the like and imaged video data (scene file), and the like are automatically associated with the project. The project can have multiple pieces of content. The project is a mechanism that includes multiple pieces of content and manages all data related to production of a video work including equipment used for producing the video work, and can also be said to be a unit of management on data.

The content is a unit on management of video data constituting a video work, and becomes different content in a case where a different Look data set is applied even to the same video data. For example, there is a case where Looks suitable for characteristics and preferences of customers who view the same video data are selectively used. A user can also freely add and delete content. Details of the project will be described later.

A scene is a component of content, and there is also a case where the scene is referred to as a cut. It can be said that the content is a series of a plurality of scenes, and the content is a superordinate concept of the scenes. Video data imaged in a project is managed in association with information data added to corresponding video data called scene data. The scene data and the content are in an independent relationship, and even if the scene data is the same, different Look data sets can be applied by separating the content.

6

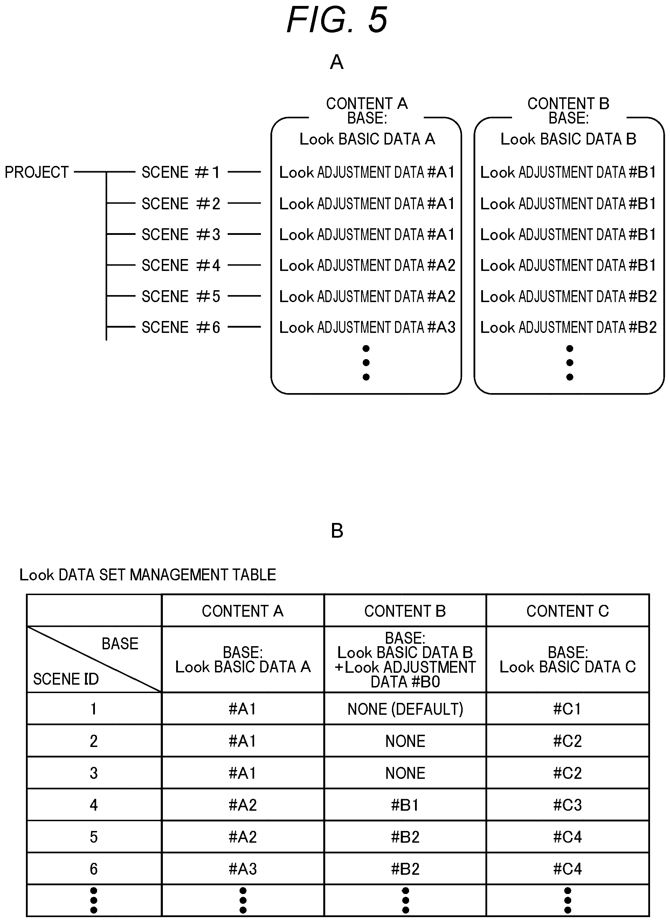

In Fig. 5, for common scene data #1 to #6, in content A, Look basic data A is designated as base Look, and Look adjustment data (#A1 to #A3) for fine adjustment is further set for every scene. In content B, Look basic data B that is another Look is designated as base Look, and Look adjustment data (#B1 and #B2) of the Look basic data B is set for every scene.

The base Look can also combine the Look basic data and the Look adjustment data. The content B is a combination of the Look basic data B and the Look adjustment data #B0. Since the scene data and content information are independent of each other, the scene data and the content information can be managed in a table format. A row is added for every scene imaging. A column is added for every content creation. The same default as the previous Look adjustment data is set at the time of scene addition.

[1-3. Configuration of Information Processing Apparatus 100]

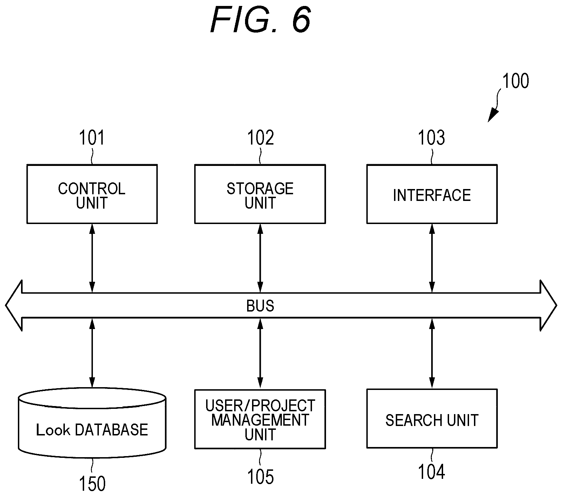

A configuration of the information processing apparatus 100 will be described with reference to Fig. 6. The information processing apparatus 100 includes a control unit 101, a storage unit 102, an interface 103, a search unit 104, a user/project management unit 105, and a Look database 150. The information processing apparatus 100 operates in, for example, a server and the like, and configures a cloud system.

The cloud is one of use forms of a computer, and is constructed in, for example, a server of a cloud service provider company, a broadcasting station, a company that performs post-production, or the like. Basically, all necessary processing is performed on a server side. A user stores data in a server on the Internet instead of his/her electronic device or the like. Therefore, it is possible to use services, use data, edit data, upload data, and the like even in various environments such as a home, a company, a place outside the office, an image shooting site, and an editing room. Furthermore, the cloud system can also transfer various data between electronic devices connected via a network.

The control unit 101 includes a central processing unit (CPU), a random access memory (RAM), a read only memory (ROM), and the like. The CPU executes various processing according to a program stored in the ROM and issues commands, thereby controlling the entire information processing apparatus 100 and each unit.

The storage unit 102 is a mass storage medium including, for example, a hard disk, a flash memory, and the like. The storage unit 102 stores programs, applications, other data, and the like for operation of the information processing system.

The interface 103 is an interface with the imaging apparatus 200, the display apparatus 300, the setting apparatus 400, the editing apparatus 500, the network, and the like. The interface 103 can include a wired or wireless communication interface. Furthermore, more specifically, the wired or wireless communication interface can include cellular communication such as 3TTE, 4G, 5G, Wi-Fi, Bluetooth (registered trademark), near field communication (NFC), Ethernet (registered trademark), high-definition multimedia interface (HDMI (registered trademark)), universal serial bus (USB), and the like. Furthermore, in a case where the information processing apparatus 100 and the server in which the information processing apparatus operates are entirely or partially implemented by the same apparatus, the interface 103 can include a bus in the apparatus, data reference in a program module, and the like (hereinafter, these are also referred to as interfaces in the apparatus). Furthermore, in a case where the information processing apparatus 100 is implemented by being distributed to a plurality of apparatuses, the interface can include different types of interfaces for the apparatuses. For example, the interface may include both a communications interface and an interface in the apparatus.

The search unit 104 searches the Look database 150 on the basis of a predetermined search method and specifies a Look data set requested by a user. The search method of the Look data set will be described later.

The user/project management unit 105 registers and manages an account and information of a user who uses a Look data set in an electronic device such as the imaging apparatus 200, an electronic device used by the user, and the like. Therefore, an operating company of the information processing apparatus 100 can provide Look management service to the user, create a user account, provide the Look data set to the user, and manage device information specific to the user and preference information of the Look data set. Using this, the Look database 150 can be accessed and managed in association with license, and a license contract with the user or a billing mechanism for collecting a fee from the user can also be constructed. Furthermore, for example, it is also possible to construct a business model in which a person who uses a Look data set (an internal camera operator, a creator who performs post-production, or the like) is charged, a company that has created the Look data set (a production company and the like) receives a usage fee thereof, and further, an external cloud system operating company receives a part of the usage fee. Moreover, it is also possible to set a plurality of billing plans according to the number, types, and the like of Look data sets, and construct a service in which Look data sets that can be used by a user are different for every billing plan selected by the user.

Furthermore, the user/project management unit 105 manages a project in video work production in association with a user account and user information. As described above, the project is a concept created when one video work is produced. Details of project management will be described later.

The Look database 150 stores and accumulates a plurality of Look data sets as a library. The database is configured using a mass storage medium such as a hard disc drive (HDD), a semiconductor memory, or a solid state drive (SSD), for example.

Note that the Look database 150 may be configured in the storage unit 102 and included in the information processing apparatus 100, or may be configured separately from the information processing apparatus 100, and the information processing apparatus 100 may access the Look database 150 to acquire, search, manage, and the like the Look data set.

Note that the processing in the information processing apparatus 100 may be realized by executing a program, and an apparatus such as a server may have a function as the information processing apparatus 100 by executing the program. The program may be installed in a server device or the like in advance, or may be downloaded, distributed on a storage medium or the like, and installed by a user himself/herself.

[1-4. Configuration of Imaging Apparatus 200]

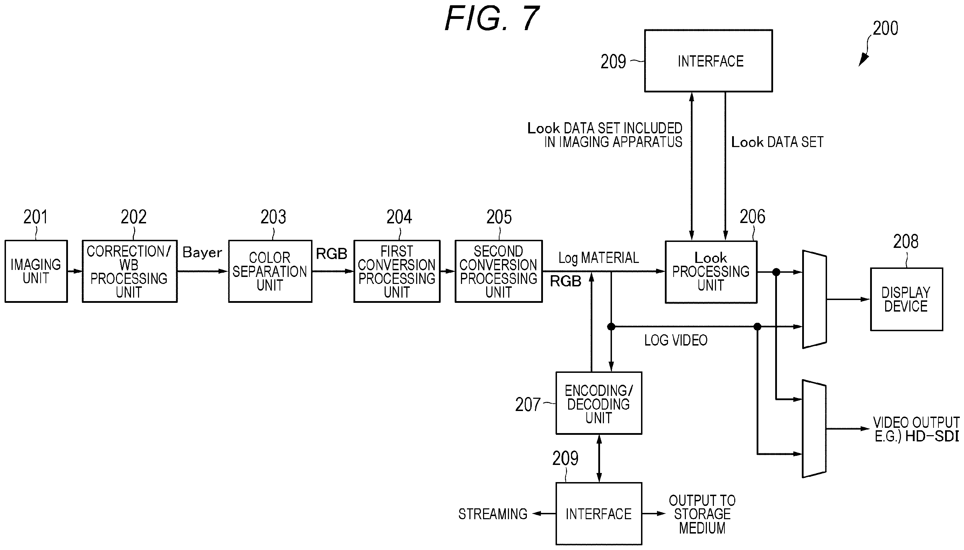

A configuration of the imaging apparatus 200 will be described with reference to Fig. 7. The imaging apparatus 200 includes an imaging unit 201, a correction/white balance processing unit 202, a color separation unit 203, a first conversion processing unit 204, a second conversion processing unit 205, a Look processing unit 206, an encoding/decoding unit 207, a display device 208, and an interface 209.

In the present embodiment, as an example, color gamut of an imaging element is converted into S-Gamut3.cine which is standard color gamut as a Log video, or a linear signal from the imaging element is converted into standard S-Log3. The Log video can be output to the outside through a serial digital interface (SDI) or the like. Note that a recording format of video data of the imaging apparatus 200 itself may be not only an encoded Log material but also a scene referred RAW material.

Note that it is also possible to output a linear video by applying a Look data set to the linear video instead of the Log video. Furthermore, there is also a case where gamma (= logarithm (Log characteristic)) is applied to the linear video when a transmission signal is viewed, and for example, there can be also a case where gamma is applied to the linear video for transmission and inverse gamma is applied on the display apparatus 300 side (for band compression on a transmission path and the like). A Log for transmission to which this gamma has been applied is a Log (gamma) different from the Log described above.

The imaging unit 201 includes a lens, an imaging element that photoelectrically converts incident light from a subject obtained through the lens into a charge amount and outputs an imaging signal, a lens drive driver that drives the lens, a processing unit that generates video data by performing analog/digital (A/D) conversion or the like on the imaging signal, and the like. The imaging element is, for example, a charge coupled device (CCD), a complementary metal oxide semiconductor (CMOS), and the like.

The correction/white balance processing unit 202 performs correction processing and white balance processing on the video data.

The color separation unit 203 performs, for example, demosaic processing as color separation processing on the video data subjected to the white balance processing. Note that the color separation unit 203 is not an essential configuration, and is unnecessary if the imaging element is not in a Bayer array.

The first conversion processing unit 204 converts RGB video data from sensor color gamut to video data of standard color gamut. Note that the video data to be converted into the standard color gamut by the first conversion processing unit 204 may be a Log video or a linear video. The second conversion processing unit 205 converts linear video data into, for example, standard S-Log3 or S-Gamut3.cine. Note that the second conversion processing unit 205 is not an essential configuration.

The Look processing unit 206 performs Look processing on video data to be processed using a Look data set. The Look processing unit 206 is implemented by, for example, a 3D LUT circuit, a 1D LUT circuit, a combination of a 1D LUT circuit and a matrix, or the like. The Look processing unit 206 performs the Look processing on the video data on the basis of the Look data set transmitted from the information processing apparatus 100 or a preset Look data set built in a main body of the imaging apparatus 200, and has a CDL adjustment function or the like to perform pre-adjustment and post-adjustment. Details of processing in the Look processing unit 206 will be described later. In the present embodiment, the video data to which the Look processing has been performed and Look has been applied is referred to as Look-applied video data. Note that the Look processing unit 206 may be realized by executing a program, and the imaging apparatus 200 may have a function as the Look processing unit 206 by executing the program. The program may be installed in the imaging apparatus 200 in advance, or may be downloaded, distributed on a storage medium or the like, and installed by a user himself/herself.

The encoding/decoding unit 207 performs encoding/decoding processing on video data. The encoded video data can be stored in a storage medium such as a USB memory or an SD card. Furthermore, the video data is transmitted to another electronic device by streaming, and a video is displayed on the other electronic device in real time so that a user can confirm contents thereof.

The display device 208 is an electronic view finder (EVF), a display, or the like, and displays video data subjected to Look processing by the Look processing unit, a through image, stored image/video data, a graphical user interface (GUI), and the like. Examples of the display device 208 include a liquid crystal display (LCD), a plasma display panel (PDP), an organic electro luminescence (EL) panel, and the like. The imaging apparatus 200 also has a function of displaying unique device identification information (for example, a QR code) for identifying a device on the display device 208. The device identification information is used, for example, to register that the imaging apparatus 200 is a device that is easily connected to the information processing apparatus 100 and uses a video work.

The display device 208 displays a video on the basis of a predetermined display method. Examples of the display method include Rec.709 and hybrid log gamma (HLG). These display methods define various requirements of resolution, a frame rate, color gamut, and assumed luminance of a display device, and the like. HLG means a hybrid of Rec.709 and Log. In the imaging apparatuses 200, there are some displayed by the display device 208 in Rec.709 and some displayed in HLG, which differ depending on a manufacturer, a model, a version, and the like of the imaging apparatus 200.

The interface 209 is an interface with the information processing apparatus 100, the display apparatus 300, the setting apparatus 400, other apparatuses, networks, and the like, and is similar to that included in the information processing apparatus 100.

The imaging apparatus 200 is connected with the information processing apparatus 100 via the interface 209 and the network, and can receive the Look data set transmitted from the information processing apparatus 100. Furthermore, the Look data set included in the imaging apparatus 200 in advance or generated in the imaging apparatus 200 can be transmitted to the information processing apparatus 100 and other electronic devices via the interface and the network.

Note that, although not illustrated, the imaging apparatus 200 includes a central processing unit (CPU), a random access memory (RAM), a read only memory (ROM), and the like, and includes a control unit that controls the entire imaging apparatus 200 and each unit, a storage unit that stores video data, a Look data set, and the like, an input unit including a shutter button, a touch panel, and the like operated by a user, and the like.

The imaging apparatus 200 is configured as described above. The imaging apparatus 200 may be a smartphone, a tablet terminal, a wearable device, or the like having a camera function in addition to an apparatus specialized in a camera function such as a digital camera, a single-lens reflex camera, a camcorder, a business camera, or a professional specification imaging apparatus.

A user can not only apply and adjust a Look data set by input to the imaging apparatus 200, but also apply and adjust the Look data set in the imaging apparatus 200 from another electronic device such as the setting apparatus 400 via the network. Furthermore, a Look data set not included in the main body of the imaging apparatus 200 can also be applied to the imaging apparatus 200 via the network. Furthermore, the imaging apparatus 200 also has a network streaming function in order to check a live view video or a reproduced video displayed on the display device 208 by another remote electronic device. Furthermore, a file transfer protocol (FTP) function for transferring video data to another device via the network is also provided.

At an image shooting site, for example, a camera operator is in charge of imaging by the imaging apparatus 200, and checks video data by the display device 208 of the main body of the imaging apparatus 200 or an external display device connected to the imaging apparatus 200. At this time, it is also possible to confirm Look-applied video subjected to the Look processing. At the same time, an image shooting director or the like responsible for image quality of an entire video work and Look also remotely checks the same video. In this case, video data is output from the imaging apparatus 200 to the external display apparatus 300 using SDI, high-definition multimedia interface (HDMI), or the like from the imaging apparatus 200. Although the imaging apparatus 200 can output the video on which the Look processing has been performed, it is also possible to output a Log video on which the Look processing has not been performed and perform the Look processing on video data on the display apparatus 300 side.

[1-5. Configuration of Display Apparatus 300]

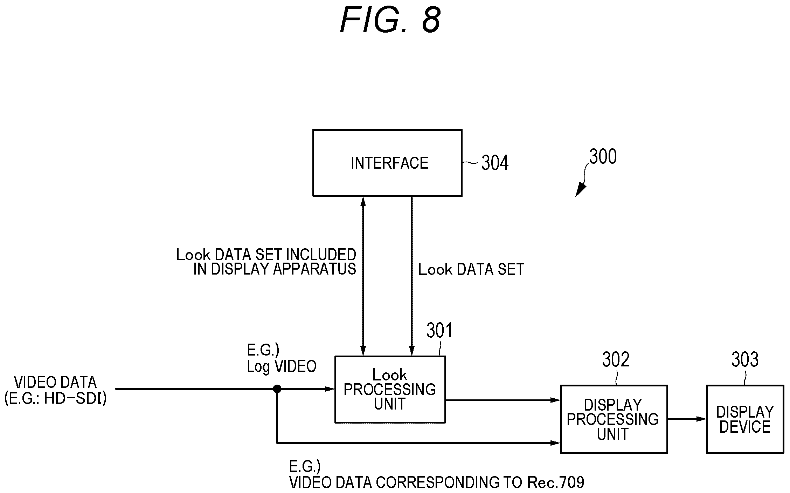

A configuration of the display apparatus 300 will be described with reference to Fig. 8. The display apparatus 300 includes a Look processing unit 301, a display processing unit 302, a display device 303, and an interface 304.

The Look processing unit 301 and the interface 304 are similar to those included in the imaging apparatus 200.

The display processing unit 302 performs processing of displaying video data subjected to Look processing on the display device 303.

The display device 303 is a display device such as a display that displays video data, a GUI, and the like. Examples of the display device include a display device including an LCD, a PDP, an organic EL panel, and the like.

The display device 303 displays a video on the basis of a predetermined display method. Examples of the display method include Rec.709 and HLG. These display methods define various requirements of resolution, a frame rate, color gamut, and assumed luminance of a display device, and the like. In the display apparatuses 300, there are some displayed by the display device in Rec.709, and some displayed in HLG, which differ depending on a manufacturer, a model, a version, and the like of the display apparatus 300.

The display apparatus 300 is connected to the information processing apparatus 100 via the interface 304 and the network, and can request the information processing apparatus 100 to transmit a Look data set and receive the transmitted Look data set. Furthermore, a Look data set included in the display apparatus 300 in advance or generated in the display apparatus 300 can be transmitted to the information processing apparatus 100 and other electronic devices via the interface and the network.

The display apparatus 300 can perform Look processing similar to that of the imaging apparatus 200 on video data such as Log video in the display apparatus 300. Furthermore, a user can not only apply a Look data set to video data and adjust the Look data set by input to an input unit, but also apply and adjust a Look data set from another device such as the setting apparatus 400 via the network. Furthermore, a Look data set not included in a main body of the display apparatus 300 can also be applied to the display apparatus 300 via the network. Moreover, the information processing apparatus 100 also has a function of outputting device identification information (for example, a QR code) unique to the device as a mechanism for easily connected to the information processing apparatus 100.

Note that, by outputting video data from the imaging apparatus 200 to a plurality of display apparatuses 300 having different display methods (for example, Rec.709 and HLG), and performing Look processing for Rec.709 in the display apparatus 300 of Rec.709 and performing Look processing for HLG in the display apparatus 300 of HLG, it is possible to confirm Looks in different display methods for one video data.

Note that, although not illustrated, the display apparatus 300 includes a CPU, a RAM, a ROM, and the like, and includes a control unit that controls the entire display apparatus 300 and each unit, an input unit such as various buttons operated by an imaging person, and the like.

[1-6. Configuration of Setting Apparatus 400]

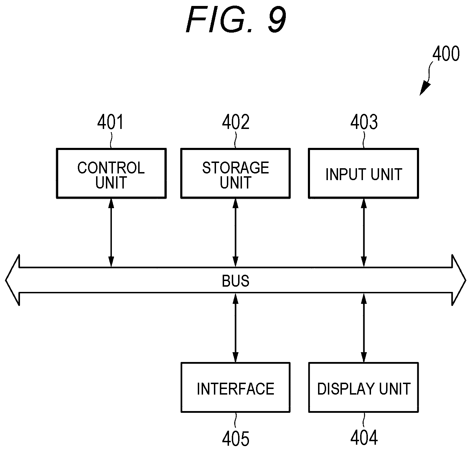

A configuration of the setting apparatus 400 will be described with reference to Fig. 9. The setting apparatus 400 is an apparatus for a user to perform a transmission request of a Look data set to the information processing apparatus 100, various input operations for project management, and the like.

The setting apparatus 400 includes a control unit 401, a storage unit 402, an input unit 403, a display device 404, and an interface 405. Since the display device 404 and the interface 405 are similar to those included in the imaging apparatus 200, the display apparatus 300, and the like, description thereof is omitted.

The control unit 401 includes a CPU, a RAM, a ROM, and the like. The CPU executes various processing according to a program stored in the ROM and issues commands, thereby controlling the entire setting apparatus 400 and each unit.

The storage unit 402 is, for example, a mass storage medium such as a hard disk, a flash memory, or the like. The storage unit 402 stores programs, applications, various data, and the like for using the information processing system.

The input unit 403 is used by a user to give various instructions to the setting apparatus 400. When input is made to an input unit 109 by the user, a control signal corresponding to the input is generated and supplied to the control unit 401. Then, the control unit 401 performs various processing corresponding to the control signal. Examples of the input unit 403 include a touch panel, a touch screen integrally formed with the display device 404, and the like in addition to physical buttons.

The setting apparatus 400 includes, for example, a personal computer, a tablet terminal, a smartphone, or the like.

[1-7. Configuration of Editing Apparatus 500]

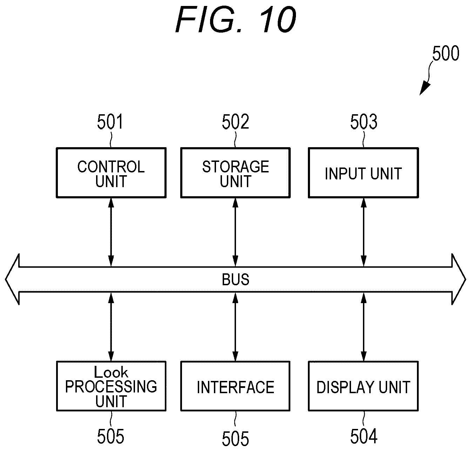

A configuration of the editing apparatus 500 will be described with reference to Fig. 10. The editing apparatus 500 includes a control unit 501, a storage unit 502, an input unit 503, a display device 504, an interface 505, and a Look processing unit 506. The control unit 501, the storage unit 502, the input unit 503, the display device 504, and the interface 505 are similar to those included in the setting apparatus 400. The Look processing unit 506 is similar to that included in the imaging apparatus 200 and the display apparatus 300.

The editing apparatus 500 is used for editing work of video data in post-production at the time of imaging or after imaging. For example, the editing apparatuses may be connected to the information processing apparatus 100 at different locations as one editing apparatus 500 among the plurality of editing apparatuses 500 is used by a colorist for color grading, and another editing apparatus 500 among the plurality of editing apparatuses 500 is used by another person for cut editing. Even in such a case, each editing apparatus 500 can automatically apply Look used at the time of imaging as a starting point of post-production. In addition, by working simultaneously at the time of imaging, Look adjusted by a colorist in a remote editing room can be reflected in real time on the imaging apparatus 200 or the display apparatus 300 at an image shooting site. The colorist is a color expert who manages colors in visually recognizable works such as videos.

The editing apparatus 500 includes, for example, a personal computer, a tablet terminal, a smartphone, or the like.

Note that the setting apparatus 400 may have a function as the editing apparatus 500, and the editing apparatus 500 may have a function as the setting apparatus 400. Furthermore, the information processing apparatus 100 and the imaging apparatus 200 may have a function as the setting apparatus 400. Moreover, the imaging apparatus 200 and/or the display apparatus 300 may function as the setting apparatus 400 and the editing apparatus 500.

The information processing system 10 is configured as described above. It is assumed that the imaging apparatus 200, the display apparatus 300, the setting apparatus 400, the editing apparatus 500, the lighting apparatus 600, and the like are constantly connected to the information processing apparatus 100 using a Look data set via the network.

[2. Description of Processing]

[2-1. Processing in Information Processing System 10]

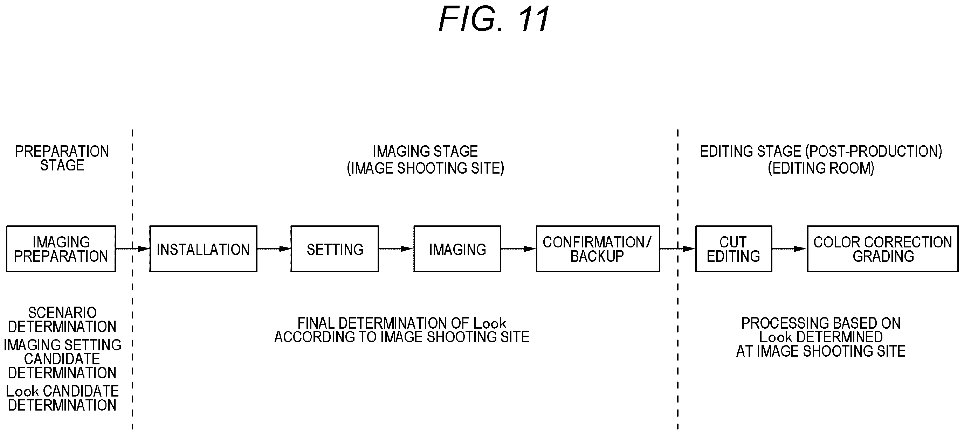

An outline of a workflow of video work production using the information processing system 10 will be described with reference to Fig. 11. First, in a preparation stage, scenario determination, imaging setting candidate determination, Look candidate determination, and the like are performed as imaging preparation.

Conventionally, it is usual to create Look data by searching for a video work (reference) of a Look image similar to a video work to be created, and manually adjusting colors and gradations of RGB data to match the reference by using a grading tool or the like while referring to the video work. Alternatively, Look data is also created by searching for data close to his/her own image from Look data distributed on the Internet and finely adjusting the data.

However, conventional systems and methods have had problems. Know-how and skill are required for creating Look, and it is difficult to independently create imaged Look. In addition, there is a case where a library of unique Look is published on the Web or the like. However, variations are limited, and it is necessary to search various sites to search for Look that he/she has imaged. Thus, it takes time to obtain the Look. Furthermore, it is often not found.

According to the present technology, since a Look data set can be searched in the Look database 150 in the preparation stage, it is possible to immediately and easily obtain imaged Look. Even if it is not completely the same as the imaged one, it is possible to create an imaged Look in a short time by obtaining and finely adjusting a similar one. In addition, it is possible to immediately and easily obtain a Look data set that reproduces favorite Look from a movie, a television program, a commercial, or the like. Moreover, since the Look data set can be registered in the system as his/her favorite, acquisition and search become easier.

Next, installation and setting of the imaging apparatus 200 and the display apparatus 300 for performing imaging at an image shooting site are performed in an imaging stage. Then, imaging is performed by the imaging apparatus 200, and when the imaging is completed, confirmation and backup of an imaged video are performed.

Conventionally, it has been necessary to manually set and adjust created Look data for each of the plurality of imaging apparatuses 200 and the display apparatuses 300. Furthermore, in a case where an image and Look do not match at the site, it is also necessary to try fine adjustment of the Look or application of another Look. In this case, setting and adjustment are manually performed again from the beginning. The Look data is often set in advance in a device to be used in a preliminary preparation stage. However, in preparation for an accident or a change at the site, it is common to store data of a plurality of candidate Look data in a storage medium such as a memory card and take the data to the site, and copy (install) the data to the device at the time of the change.

Since the same Look is individually set to be applied to the plurality of imaging apparatuses 200 and the display apparatuses 300, there are problems that it takes time and effort and omission of the setting is likely to occur. Furthermore, when it is desired to switch to another Look in the middle, it is necessary to perform setting again for the plurality of devices, and thus there is also a problem that it takes time and effort. Moreover, since the Look data created in advance is copied to the storage medium and brought to the site, there is also a problem that imaging on that day cannot be performed in a case where the storage medium is forgotten or in a case where the storage medium is broken.

According to the present technology, in the imaging stage, for example, the master imaging apparatus 200 is designated, and the other electronic devices are set to be synchronized with Look of the master imaging apparatus, so that Look setting of the master imaging apparatus 200 is automatically reflected on the other electronic devices in real time. Not only the imaging apparatus 200 but also the remote editing apparatus 500 can be set as the master, for example, and a Look state of grading software on the editing apparatus 500 can be reflected in a camera at the image shooting site in real time. As a result, it is possible to perform Look adjustment close to a final finished image at the site, to make color collection and grading in post-production, which is post-stage processing, short or unnecessary, and to realize production work in a short period as a whole. In addition, since synchronization between the Look devices is automatically performed, omission does not occur. Furthermore, since the setting is performed through the network, it is not necessary to consciously carry necessary data with a memory card or the like, and forgetting to bring the data to the site is prevented.

Thereafter, in an editing stage, the post-production including cut editing, color collection, grading, and the like is performed in an editing room or the like. Then, the video work is completed.

Conventionally, Look data is stored in a storage medium such as a memory card or an HDD, brought to an editing work place, copied (installed) in editing software to reproduce Look of the site, and color collection and grading are performed starting from the reproduction.

Since it is necessary to manually read the Look data imaged at the site into the editing software, there is a problem that it takes time and effort to reproduce the Look of the site. Furthermore, an error such as omission is likely to occur. Moreover, in a case where an editing place is divided into a plurality of places, it is necessary to perform the same preparation at each place, and there is also a problem that it is difficult to notice an incorrect Look setting value set only at a certain place.

According to the present technology, similarly to field work, Looks of the editing apparatus and an external display apparatus for confirmation are automatically synchronized. Therefore, setting in editing software does not take time and effort, and omission does not occur.

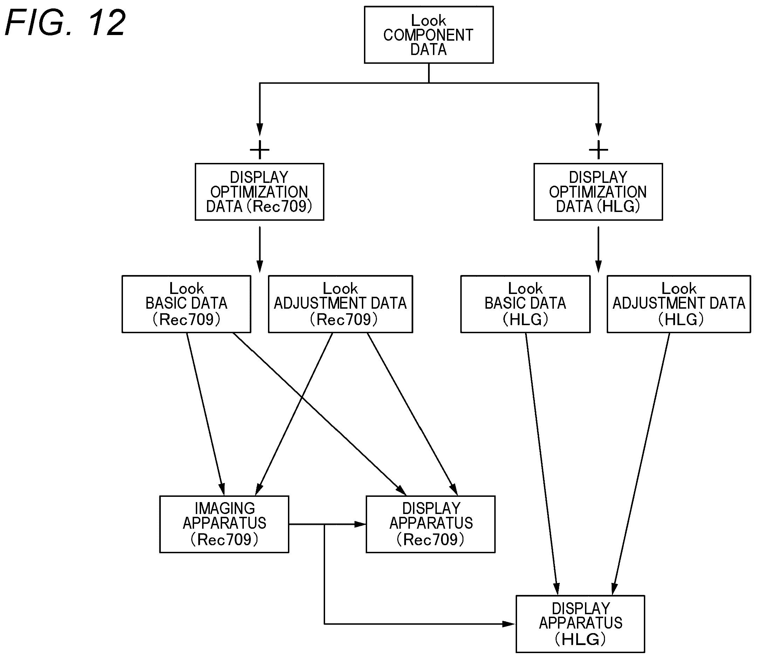

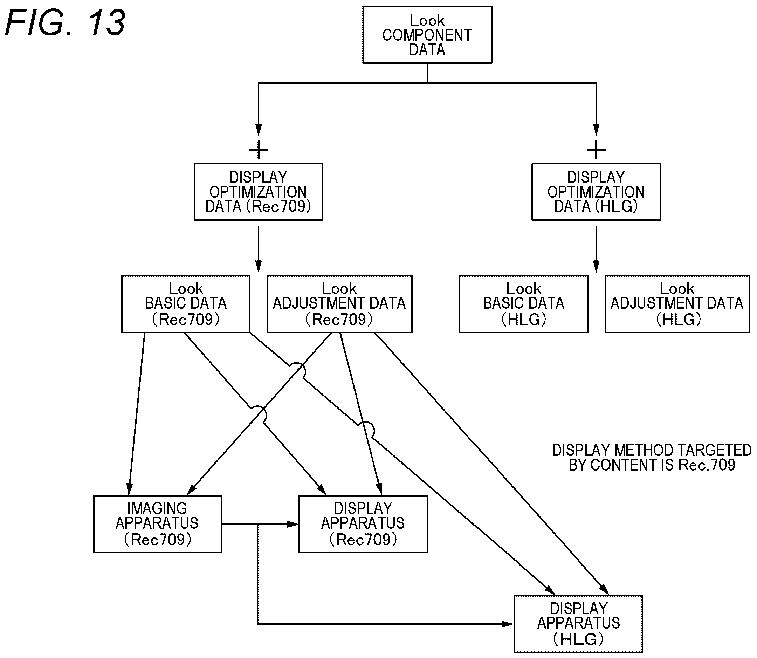

Next, transmission of a Look data set from the information processing apparatus 100 to the electronic devices will be described with reference to Figs. 12 and 13. The transmission of the Look data set to the electronic devices is performed in response to a transmission request of the Look data set from the setting apparatus 400 to the information processing apparatus 100.

As described above, the Look basic data of the Look data set stored in the Look database 150 includes the Look component data and the display optimization data, and the display optimization data is data corresponding to every display method (Rec.709, HLG, etc.) of the electronic device. Therefore, it can be said that the Look basic data including the display optimization data is also data corresponding to every display method of the electronic device. Furthermore, the Look adjustment data includes target display device information, and is data corresponding to every display method of the electronic device.

For example, when a user requests the information processing apparatus 100 from the setting apparatus 400 to transmit a Look data set to the imaging apparatus 200 and the display apparatus 300, the Look data set including the Look basic data corresponding to the display method of the imaging apparatus 200 and the display apparatus 300 is transmitted from the information processing apparatus 100.

Therefore, as illustrated in Fig. 12, for example, in a case where the display method of the imaging apparatus 200 and the display apparatus 300 as transmission targets of the Look data set is Rec.709, the Look data set including the Look basic data and the Look adjustment data for Rec.709 is transmitted. Furthermore, in a case where the display method of the display apparatus 300 as a transmission target of the Look data set is HLG, the Look data set including the Look basic data and the Look adjustment data having the display optimization data for HLG is transmitted.

In this case, when the user makes a request to transmit the Look data set from the setting apparatus 400 to the information processing apparatus 100, display method information of the electronic device to be transmitted may be transmitted, and the information processing apparatus 100 may transmit the Look data set corresponding to the display method of the electronic device on the basis of the display method information. Alternatively, the display method information of the electronic device may also be registered at the time of registering the electronic device in the information processing apparatus 100, and the information processing apparatus 100 may transmit the Look data set corresponding to the display method of the electronic device by referring to the display method information. Note that the display method of the electronic device includes not only a display method of a display device included in the electronic device itself but also a display method of a separate external display device (such as an external monitor) connected to the electronic device. Therefore, for example, in a case where a separate external display device is connected to the imaging apparatus 200 and video data in the imaging apparatus 200 is confirmed by the external display device, a Look data set corresponding to the display method of the external display device is transmitted to the imaging apparatus 200.

Note that, in a case where there is a display method targeted by a video work to be produced (desirable display method in which a video work is viewed by a viewer), and a user sets the display method in a project, regardless of the display method of the electronic device, a Look data set of the display method targeted by the video work is transmitted to each electronic device.

Therefore, as illustrated in Fig. 13, in a case where a display method targeted by content of a project is set to Rec.709, a Look data set including Look basic data and Look adjustment data for Rec.709 is transmitted to the display apparatus 300 whose display method is Rec.709, and the Look data set including the Look basic data and the Look adjustment data for Rec.709 is also transmitted to the display apparatus 300 whose display method is HLG. Note that, in this case, color, brightness, gradation expression, and the like within color gamut of Rec.709 are displayed in a manner similar to those of Rec.709, and in a case where there is color, brightness, or gradation expression outside the color gamut of Rec.709, it is displayed within the range of an HLG standard.

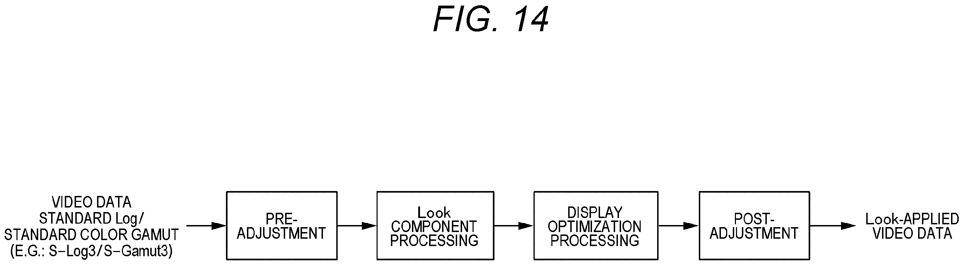

Next, a flow of Look processing performed by a Look processing unit of an electronic device that has received a Look data set from the information processing apparatus 100 will be described with reference to Fig. 14.

First, pre-adjustment is performed on video data to be processed which is in a standard log or standard color gamut (S-Log3, S-Gamut3, etc.). This video data to be processed is, for example, RGB video data of 1920 × 1080 in full high definition (FULLHD). As the pre-adjustment, for example, CDL processing or the like using a CDL parameter included in Look adjustment data is performed. Note that the video data to be processed may be in linear/standard color gamut.

Next, the video data is subjected to Look component processing using 3D LUT data or the like that is Look component data. Next, display optimization processing is performed using display optimization data. The Look component processing and the display optimization processing are included in the Look processing. Then, post-adjustment is performed on the video data. As the post-adjustment, for example, the CDL processing or the like using the CDL parameter included in the Look adjustment data is performed. Therefore, the video data to which Look has been applied and which has been optimized for the display method of the display device is output.

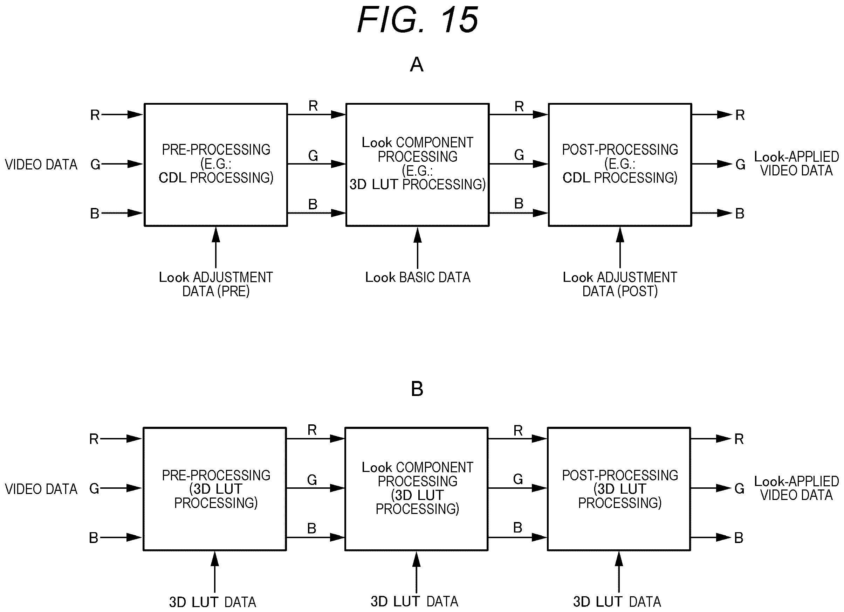

In the Look processing, as illustrated in Fig. 15, for example, video data of R, G, and B each of which is 1920 × 1080 is input and the processing is performed.

Then, as illustrated in Fig. 15A, for example, CDL processing is performed on the video data as the pre-adjustment, 3D LUT processing is performed as the Look component processing, and the CDL processing is further performed as the post-adjustment. Furthermore, as illustrated in Fig. 15B, there is also a case where 3D LUT processing using 3D LUT data that is Look component data is performed as the pre-adjustment, the Look component processing, and the post-adjustment. Note that the display optimization processing is omitted in Fig. 15 for convenience of description.

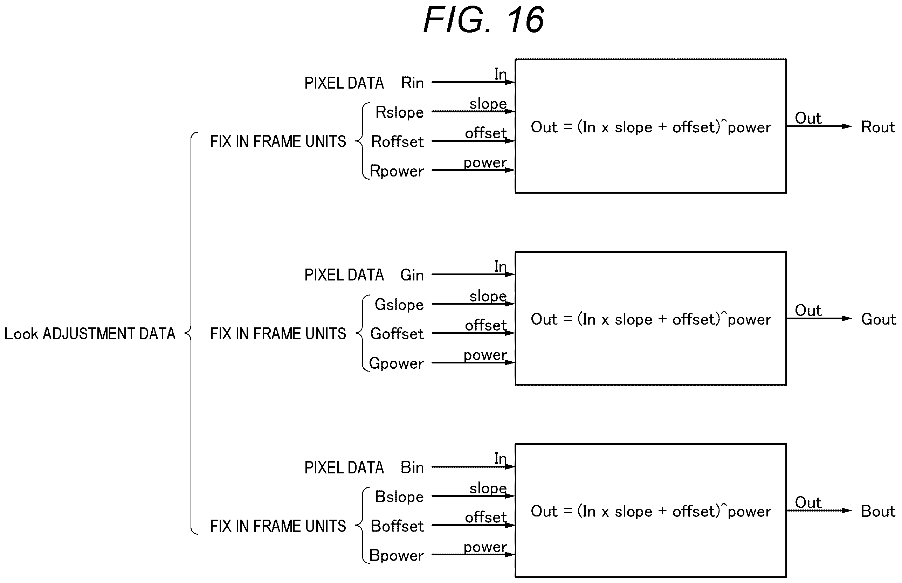

The CDL processing performed as the pre-adjustment and the post-adjustment will be described with reference to Fig. 16. The CDL processing is performed on each of RGB constituting the video data.

The CDL parameter for performing the CDL processing is included in the Look adjustment data. In the CDL processing, processing of the following Formula 1 is performed on video data (IN) to be processed using parameters such as Slope, offset, and Power, thereby generating output video data (OUT). Note that there are individual Slope, Offset, and Power for each of RGB.

$$\text{[Formula 1]}$$
$$\text{OUT} = (\text{IN} \times \text{slope} + \text{offset})^{\text{power}}$$

Slope is a gain value corresponding to gamma of a negative film and multiplied by each gradation value of the video data. Offset is an offset value to be added to or subtracted from each gradation value of the video data, and an effect equivalent to changing sensitivity of the imaging apparatus 200 can be obtained. Power is a gamma value of gamma conversion to be applied to the video data.

Note that processing may be performed by using 3D LUT data in the pre-adjustment and the post-adjustment instead of the CDL processing.

Both the pre-adjustment and the post-adjustment are performed by using the CDL and the 3D LUT data. Since the pre-adjustment is processed before the Look component processing is performed, it is mainly for performing adjustment largely related to the entire video data. On the other hand, the post-adjustment is processing performed after the display optimization processing, and is mainly for finely adjusting the video data optimized for the display device. Only one or both of the pre-adjustment and the post-adjustment may be performed.

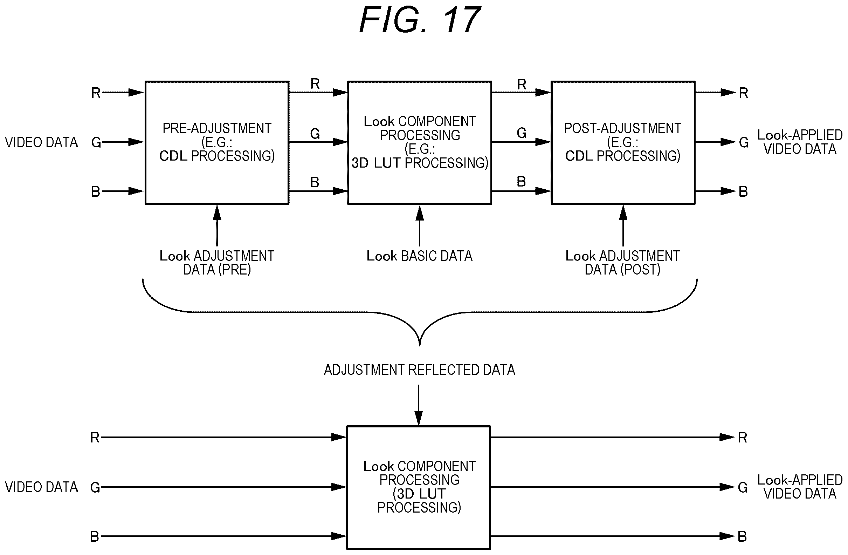

Note that, as illustrated in Fig. 17, Look pre-adjustment data, Look component data, and Look post-adjustment data used in a series of pre-adjustment, Look component processing, and post-adjustment can be collectively converted into one data (3D LUT data or the like), and the three processing can be performed as one processing using the data. Processing results are the same. Note that the display optimization processing is omitted in Fig. 17 for convenience of description.

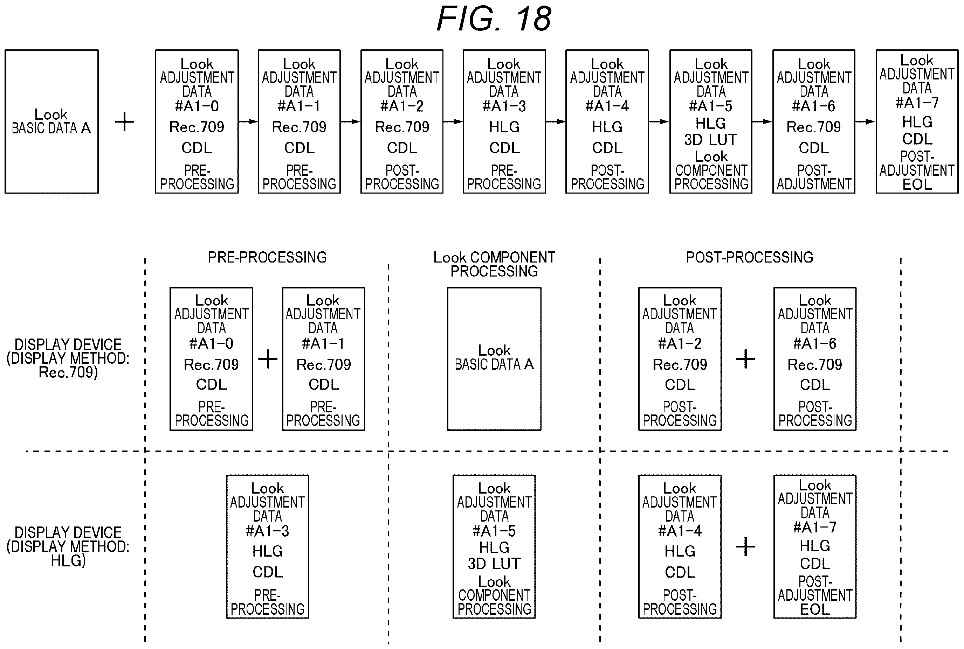

A use example of a Look data set in pre-adjustment, Look component processing, and post-adjustment will be described with reference to Fig. 18. Look basic data constituting the Look data set is Look basic data A, and Look adjustment data for adjusting Look is Look adjustment data #A1. Here, it is assumed that the Look adjustment is performed eight times, and a total of eight pieces of Look adjustment data exist in #A1-0 to #A1-7.

In a notation of each Look adjustment data in Fig. 18, the Look adjustment data #A1-0 means that a CDL processing parameter for a display device of Rec.709 used for the pre-adjustment has been adjusted. The Look adjustment data #A1-4 means that a CDL processing parameter for a display device of HLG used for the post-adjustment has been adjusted. The Look adjustment data #A1-5 means that a parameter of 3D LUT for the display device of HLG used for the Look component processing has been adjusted.

For an electronic device including the display device of Rec.709, the pre-adjustment is performed using the Look adjustment data #A1-0 and the Look adjustment data #A1-1. In addition, the Look processing is performed using the Look basic data A. Moreover, the post-adjustment is performed using the Look adjustment data #A1-2 and the Look adjustment data #A1-6.

Furthermore, for an electronic device including the display device of HLG, the pre-adjustment is performed using the Look adjustment data #A1-3. In addition, the Look component processing is performed using the Look adjustment data #A1-5. Moreover, the post-adjustment is performed using the Look adjustment data #A1-4 and the Look adjustment data #A1-7.

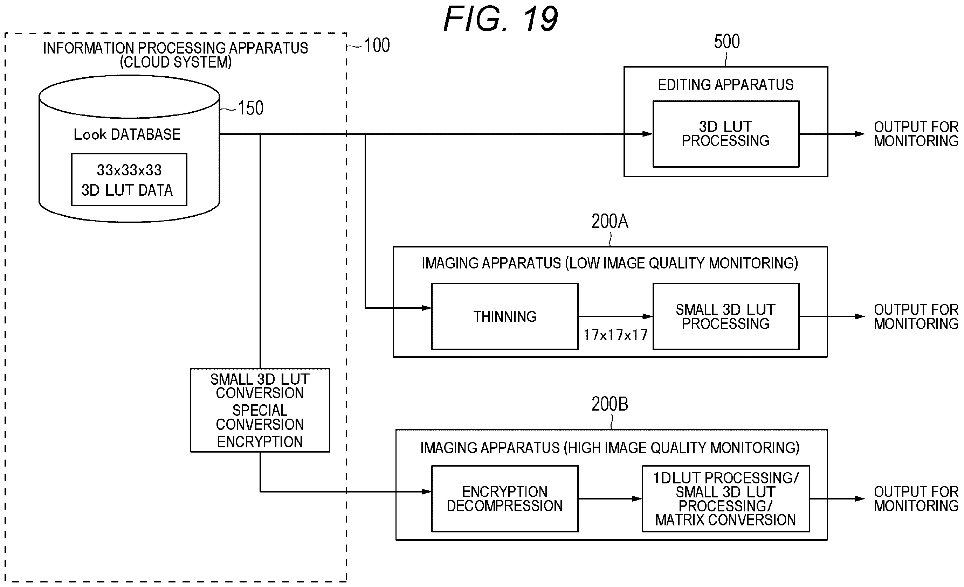

Next, variations of Look basic data in a 3D LUT format will be described with reference to Fig. 19. Currently, 3D LUT data included in Look basic data and used in color grading in post-production is generally 3D LUT data of 33 × 33 × 33 grid points. Originally, for example, in a case where 10-bit RGB data is handled, there is a possibility that R, G, and B are 0 to 1023 pieces of data, that is, 1024 pieces of data in total, and thus, 3D LUT data of 1024 × 1024 × 1024 grid points is required.

However, this results in enormous 3D LUT data. Therefore, in a personal computer or the like capable of high-speed processing and capable of securing stable power, 3D LUT data of 1024 × 1024 × 1024 grid points is generally thinned out to 33 × 33 × 33, and the thinned data is interpolated using a method such as triangular pyramid interpolation. However, even in the case of the 3D LUT data of 33 × 33 × 33, a circuit scale and power required for processing become very large. Therefore, in a case where processing speed and power are restricted due to a configuration of hardware such as a camera, there is a method of further thinning out to obtain 3D LUT data of 17 × 17 × 17 grid points. Note that the smaller the number of grid points, the larger the interpolation and the lower the quality of video data after Look processing.

As illustrated in Fig. 19, it is assumed that the 3D LUT data of 33 × 33 × 33 is stored in the Look database 150 as a component of the Look basic data. In color grading on the editing apparatus 500 including a personal computer or the like capable of high-speed processing and capable of securing stable power, the Look basic data is used as it is.

Furthermore, in an electronic device that cannot display (monitor) a video with high image quality as illustrated in an imaging apparatus 200A, thinning processing is performed, and the 3D LUT data of 33 × 33 × 33 is thinned out to 17 × 17 × 17, which is half, to obtain small 3D LUT data, so that the 3D LUT data can be monitored as a low image quality Look-applied video. This method of thinning out the 3D LUT data of 33 × 33 × 33 to 17 × 17 × 17, which is half, to obtain the small 3D LUT data is referred to as simple thinning.

On the other hand, for an electronic device capable of displaying (monitoring) a video with high image quality as illustrated in an imaging apparatus 200B, the 3D LUT data is set to small 3D LUT data of 17 × 17 × 17 in the information processing apparatus 100, special conversion processing is further performed to prepare a high image quality monitoring dedicated Look data set (referred to as Binary data) in advance, and the data set is stored in the Look database 150 together with the 3D LUT data of 33 × 33 × 33.

Then, in the imaging apparatus 200 capable of high image quality display, a 1D LUT circuit or a matrix circuit having a small scale is used in combination, so that it is possible to perform monitoring as a Look-applied video having a higher image quality than that of the 3D LUT of 17 × 17 × 17.

The control unit 101 performs encryption, special conversion, and LUT conversion in the information processing apparatus 100 described above. Note that the encryption, the special conversion, and the LUT conversion may be performed in the interface 103. Encryption decompression, thinning, matrix conversion processing, and LUT processing in the imaging apparatus 200 are performed in the Look processing unit 206. Note that there is a case where the decompression processing is performed in the interface 209.

Note that the encryption processing may be performed on the 3D LUT data together with the special conversion. An encryption decompression unit may be provided in the imaging apparatus 200 capable of monitoring a video with high image quality, and the 3D LUT data subjected to the special conversion may be used only in the imaging apparatus 200 capable of high image quality monitoring. Therefore, for example, this Binary data can be made available only to a user who has a license for enabling high image quality monitoring. Normal 3D LUT data is generally text data, but this Binary data can be encrypted to prevent illegal free use.

Note that the information processing apparatus 100 may include a processing unit that performs small 3D LUT conversion, special conversion, and encryption, or a configuration of a cloud system other than the information processing apparatus 100 may be used.

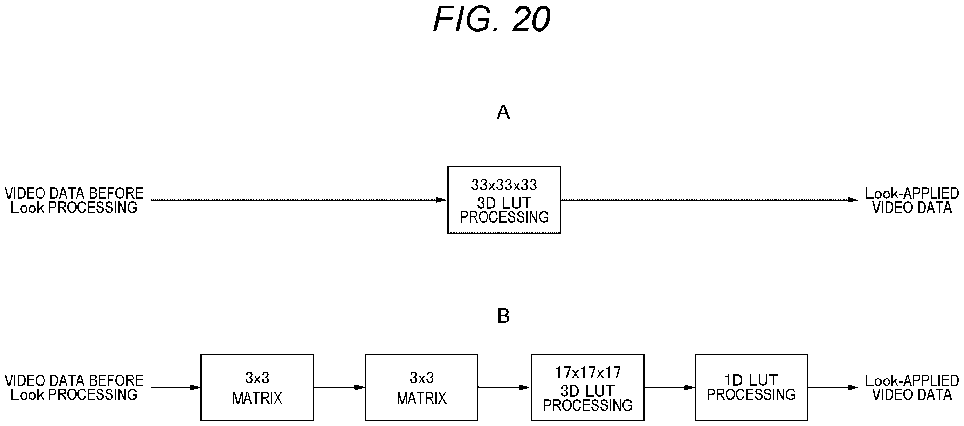

The above-described special conversion will be described with reference to Fig. 20. Fig. 20A is a normal conversion as a comparison target, and 3D LUT data of 1024 × 1024 × 1024 grid points is thinned out to perform processing as 3D LUT data of 33 × 33 × 33.

On the other hand, in the special conversion illustrated in Fig. 20B, the 3D LUT data processing of 33 × 33 × 33 illustrated in Fig. 20A is divided into 3 × 3 matrix conversion, small 3D LUT conversion of 17 × 17 × 17, and 1D LUT conversion. Therefore, it is possible to obtain high image quality video data after Look processing closer to a result of 3D LUT conversion of 33 × 33 × 33 than that of simple 3D LUT conversion of 17 × 17 × 17. Note that, in the imaging apparatus 200 capable of high image quality display, simple thinning may be performed in the special conversion, or another method may be adopted as long as high image quality display can be performed as compared with simple thinning.

Note that, in Fig. 19, the imaging apparatus 200 has been described as an electronic device capable of/incapable of high image quality display, but the display apparatus 300 or another electronic device having a display device may be used.

For example, a Look data set including Look basic data in a 3D LUT format subjected to special conversion for high image quality display may be acquired by charging by a user.

[2-2. UI for Use of Information Processing System 10]

Next, a UI for using the information processing system 10 will be described. This UI is displayed on the setting apparatus 400, for example.

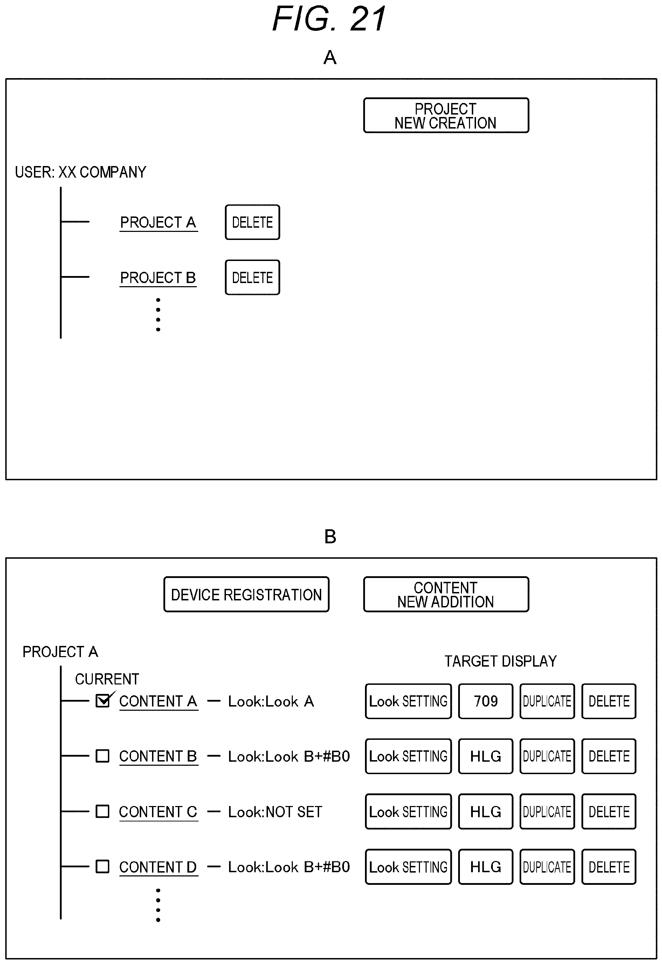

Fig. 21A is an example of a user account page displayed on the setting apparatus 400 when a Look management service provided by the information processing apparatus 100 is accessed from the setting apparatus 400. A user who has registered with the Look management service can have his/her own account page.

In the user account page, a user name, a project name, a link to a project, and a project deletion button are displayed. The user can freely add or delete the project.

A project management page illustrated in Fig. 21B is provided with: a project name; a content name included in a project; a current content setting button; a Look setting button, a display method setting button, a duplication button, and a deletion button for each content; and moreover, a device registration button; and a content addition button.

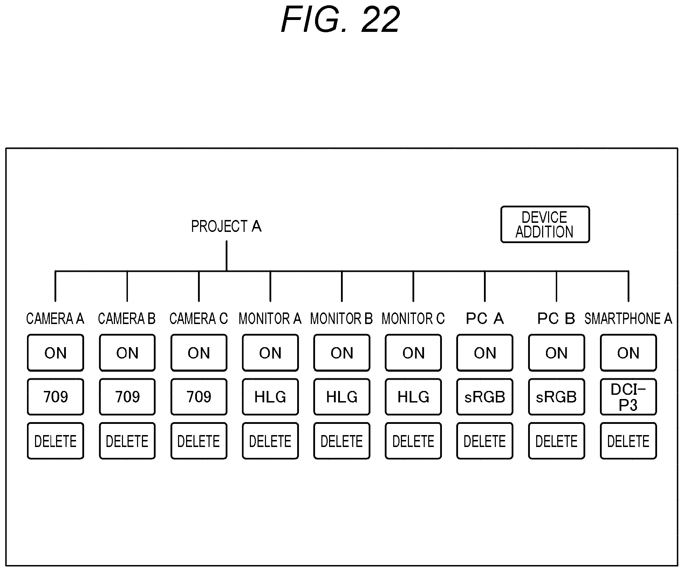

When input is performed on the device registration button, the UI transitions to a device registration page for connecting and registering an electronic device used in a project illustrated in Fig. 22 to the information processing apparatus 100. The device registration page is provided with a device addition button for additionally registering the electronic device to the project. The user causes a display device of the electronic device to be registered to display device identification information (such as a QR code) unique to the device.

The user reads the device identification information using a camera function or the like of the setting apparatus 400, and transmits the device identification information from the setting apparatus 400 to the information processing apparatus 100. Internet access information unique to the electronic device can be obtained from the device identification information, and the device is connected to the information processing apparatus 100 and registered. Note that, in a case of a LAN configuration, connection is made via an access point.

The device identification information may include manufacturer information, device model information, device version information, device model number information, an IP address used by the electronic device, type information of a display device included in the electronic device, and the like.

Fig. 22 illustrates a display example of the device registration page when a plurality of electronic devices such as a camera (corresponding to the imaging apparatus 200), a monitor (corresponding to the display apparatus 300), a PC (corresponding to the setting apparatus 400 or the editing apparatus 500), and a smartphone (corresponding to the setting apparatus 400 or the editing apparatus 500) is registered. An ON/OFF button, a display method button, and a registration deletion button are provided for each registered electronic device.

The ON/OFF button is a button for remotely controlling ON/OFF of the registered electronic device. The display method button indicates a display method of a display device of the electronic device. The registration deletion button is a button for canceling registration of an electronic device that does not need to be used, and when input, connection between the electronic device and the information processing apparatus 100 can be invalidated, and display of the electronic device can be deleted from the device registration page.

By registering the electronic device in the project on the device registration page, the same Look data set is transmitted from the information processing apparatus 100 to the registered electronic device. Furthermore, in a case where the Look data set is adjusted by any of the registered electronic devices, Look adjustment data including adjustment contents thereof is also shared by the registered electronic devices. Therefore, Look is synchronized and unified in the registered electronic devices. If a user uses an electronic device to create a video work in a project and wants to unify Look, the electronic device needs to be registered in the project on the device registration page.

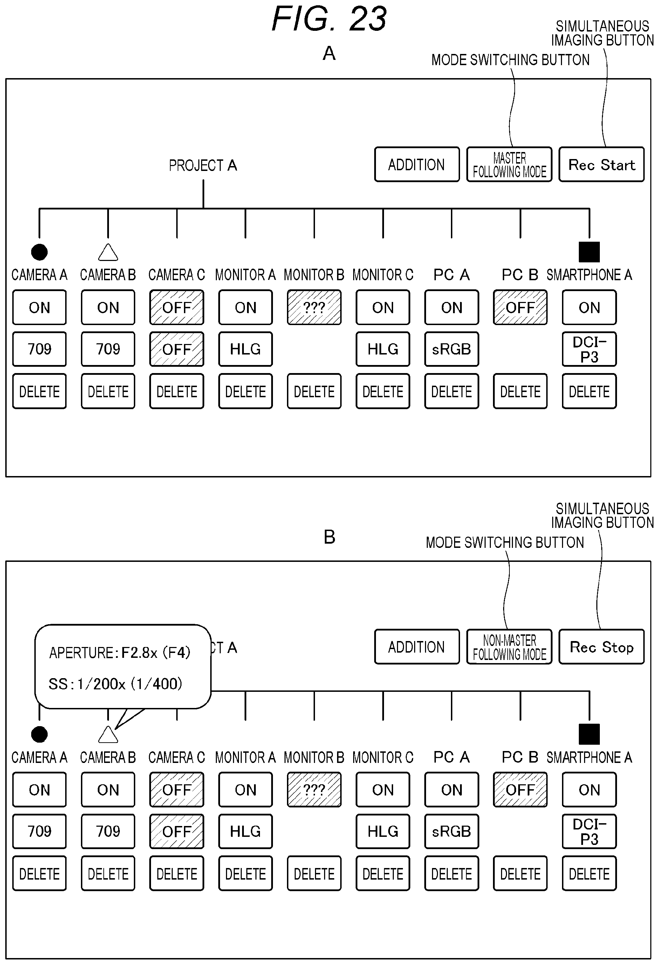

Fig. 23 illustrates a configuration of a device management page in the UI displayed on the setting apparatus 400. This device management page indicates statuses of all the electronic devices registered in the project. In a case where power of the electronic device is ON, an ON/OFF button is displayed in an ON state under the name of the electronic device, and in a case where the power of the electronic device is OFF, the ON/OFF button is displayed in an OFF state. In a case where a specific electronic device is not intentionally used temporarily, the electronic device can be changed to the OFF state by being turned off by performing input on an ON/OFF button corresponding to the electronic device (power ON/OFF control of the electronic device may be performed in conjunction with this button). Note that the ON/OFF button in the OFF state can be grayed out to explicitly indicate the OFF state to a user.

When the electronic device is registered in the project and the status of the electronic device is unknown due to some cause such as a network failure, for example, an alert can be issued in such a manner that the user can clearly understand the status by displaying an unknown status state such as "???" and graying out the button.

Furthermore, in the device management page, a display method button is provided so as to correspond to each electronic device, and a display method of a display device of each electronic device is illustrated. For example, it is assumed that a display method targeted by a video work produced by a project is HLG. In that case, basically, HLG display is performed in all electronic devices. However, for example, in a case where a display device of a camera A can display only in Rec.709, Rec.709 is automatically displayed in the camera A. In that case, a Look data set for Rec.709 is automatically transmitted from the information processing apparatus 100 to the camera A, and is reflected in video data in a Look processing unit of the camera A. For example, it is also possible to intentionally change a device compatible with both HLG and Rec.709 to one of the display methods by performing input on a display method button compatible with an electronic device.

Furthermore, in Fig. 23A, a circle icon attached to the camera A indicates that the camera A is the above-described imaging apparatus for confirmation. The imaging apparatus for confirmation can be changed by moving the circle icon to another camera by dragging and dropping. Video data of the imaging apparatus for confirmation is streamed as a live view video to the other electronic device via the network.

Furthermore, a square icon attached to a smartphone A is an icon for designating a master. A mode in which any of the electronic devices is designated as the master is referred to as a master following mode. By dragging and dropping the square icon to an arbitrary electronic device name and moving the icon, the electronic device to be the master can be freely changed. Change/adjustment of a Look data set can be performed only by this master electronic device, information of the change and Look adjustment data are transmitted to the other electronic device via the information processing apparatus 100, and in the other electronic device, the Look data set is changed/adjusted following the change/adjustment of the Look data set performed by the master electronic device. Note that, in the master following mode, lock may be performed such that an electronic device other than the master electronic device cannot change/adjust the Look data set.

When imaging is started, it is necessary that settings such as Look are prepared in all the electronic devices, and the settings are usually prepared automatically. However, in a case where there is an electronic device having a different setting for some reason, a triangle icon is displayed on an electronic device having a different setting as for a camera B, and a user is notified of the fact.

When an input such as moving a cursor to the triangle icon is performed, a difference in setting from the other electronic devices may be able to be displayed in a list as illustrated in Fig. 23B. In an example of Fig. 23B, regarding an aperture and a shutter speed, settings of the camera B are displayed along with settings of the other cameras in parentheses. Note that any setting that affects video data, such as an angle of view, a frame rate, and a color temperature setting, can be displayed in addition to the settings/parameters included in the Look data set. As described above, in a case where there is a difference in setting among the devices, a Rec Start button is grayed out and input cannot be performed so that imaging cannot be started, whereby an imaging accident can be reduced. Note that the circle icon, the square icon, and the triangle icon described above are shapes added for convenience only to distinguish the icons, and the shapes of the icons may be any shapes.

It is possible to switch the project between the master following mode and a non-master following mode by inputting to a mode switching button in the device management page. Display of the mode switching button changes according to the mode switching. The master following mode is displayed in Fig. 23A, and the non-master following mode is displayed in Fig. 23B.

In the master following mode, only the electronic device set as the master can change/adjust the Look data set, and the Look data sets of the other electronic devices are automatically changed/adjusted following the change/adjustment.

In the non-master following mode, any electronic device can change/adjust the Look at any time, and information of the change and the Look adjustment data are transmitted to the electronic devices other than the electronic device that has performed the earliest change/adjustment via the information processing apparatus 100, and the Look data set is changed/adjusted by following.

A simultaneous imaging button is a button for simultaneously bringing the plurality of imaging apparatuses 200 into a recording state or a recording stop state in a case where imaging is performed by the plurality of imaging apparatuses 200. In the recording stop state, as illustrated in Fig. 23A, the simultaneous imaging button is denoted as Rec Start, and by performing input thereto, a control signal is transmitted from the information processing apparatus 100 or the setting apparatus 400 to all the imaging apparatuses 200, and recording can be started in all the imaging apparatuses 200 at the same time.

Furthermore, as illustrated in Fig. 23B, in the recording state, the simultaneous imaging button is denoted as Rec Stop, and by performing input thereto, a control signal is transmitted from the information processing apparatus 100 or the setting apparatus 400 to all the imaging apparatuses 200, and the recording state can be simultaneously stopped in all the imaging apparatuses 200. Note that the simultaneous imaging start/stop button is changed in color between the recording state and the recording stop state, so that a user can easily visually confirm whether or not recording is currently being performed.

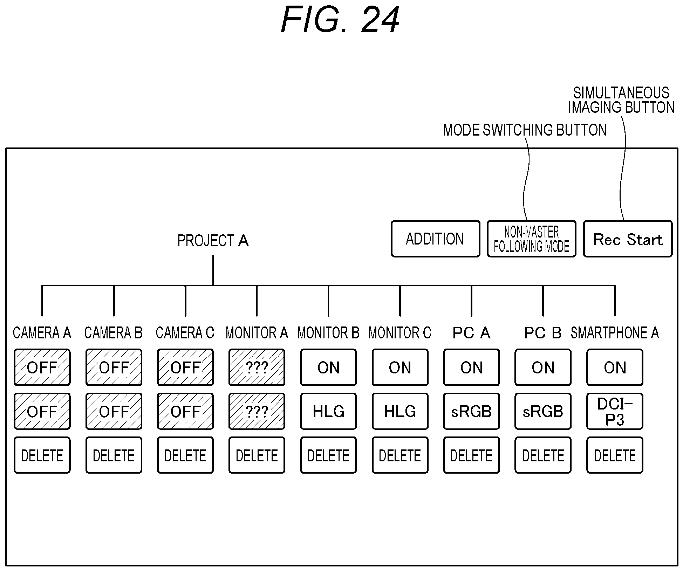

Fig. 24 is a display example of a device management page in a post-production stage after completion of imaging. A monitor B and a monitor C as the display apparatus 300 used for post-production, the smartphone A as the setting apparatus 400, and a personal computer A and a personal computer B as the editing apparatus 500 are in an ON state. Since the imaging is finished, the camera A, the camera B, and the camera C as the imaging apparatus 200 are turned OFF. Note that, in the example of Fig. 24, since a monitor A is not intentionally set to an OFF state, the monitor A is in an unknown status state, but there is no particular influence on post-production work. Furthermore, since all the cameras are in an OFF state in the post-production stage, the simultaneous imaging button does not function.

In this post-production stage, similarly to the imaging stage, a display method button is provided corresponding to each electronic device, and a display format of the display device of each electronic device is illustrated. For example, in a case where a target of a display method of a video work managed and produced by a project is HLG, HLG is set to the monitor. Note that, in a case where the personal computer is a display integrated type, since the display has an sRGB format, HLG display cannot be performed, and sRGB setting is performed. Therefore, color collection and color grading are performed by connecting the PC to the monitor of HLG.

Note that, in the above description, input information to the UI is transmitted from the setting apparatus 400 to the information processing apparatus 100, the information processing apparatus 100 controls and manages the registered electronic devices, and a control signal or the like is transmitted from the information processing apparatus 100 to each electronic device. However, the setting apparatus 400 may control or manage the registered electronic devices on the basis of the input information to the UI, and a control signal or the like may be transmitted from the setting apparatus 400 to each electronic device.

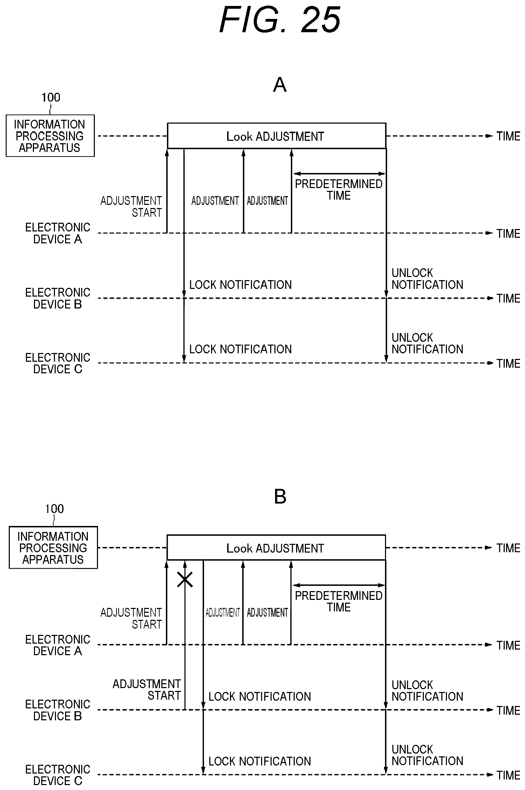

Next, processing in a case where a plurality of electronic devices adjusts a Look data set in a non-master following mode will be described with reference to Fig. 25. In Fig. 25, it is assumed that the Look data set can be adjusted by an electronic device A, an electronic device B, and an electronic device C.

First, a first example is a case where a user first adjusts the Look data set by performing input to the electronic device A as illustrated in Fig. 25A. In this case, a lock notification is transmitted from the information processing apparatus 100 to the electronic device B and the electronic device C, adjustment from the electronic device B and the electronic device C is not accepted, and the Look data set cannot be adjusted. Transmission of the lock notification by the information processing apparatus 100 is performed under the control of the control unit 101.

Then, in a case where a state in which there is no input to adjust the Look data set from the user to the electronic device A continues for a predetermined time (for example, one minute or the like), the information processing apparatus 100 transmits an unlock notification to the electronic device B and the electronic device C, accepts adjustment of the Look data set from the electronic device B and the electronic device C, and enables adjustment of the Look data set.

A second example is a case where, as illustrated in Fig. 25B, a user first adjusts the Look data set by performing input to the electronic device A within a predetermined period, but another user tries to adjust the Look data set by performing input to the electronic device B before a lock notification is transmitted to the electronic device B and the electronic device C. That is, this is a case where the Look data set adjustment has been executed by the plurality of electronic devices within the predetermined period.

In this case, since the information processing apparatus 100 can recognize that the adjustment from the electronic device B is performed after the adjustment from the electronic device A on the basis of an arrival time of data of adjustment input from each electronic device, only a content of the adjustment from the electronic device A that has performed the earliest adjustment is recorded as Look adjustment data, and a content of the adjustment from the electronic device B is not recorded as the Look adjustment data. Moreover, the lock notification is transmitted from the information processing apparatus 100 to the electronic device B and the electronic device C, adjustment from the electronic device B and the electronic device C is not accepted, and the Look data set cannot be adjusted. Note that unlocking in a case where a state in which there is no input to adjust the Look data set from a user to the electronic device A continues for a predetermined time (for example, one minute or the like) is similar to that described with reference to Fig. 25A. Note that the Look data set can be adjusted by any electronic device after a lapse of the predetermined period, but in that case, only a content of adjustment from the electronic device that has performed the earliest adjustment is recorded as the Look adjustment data.

Note that, for example, it is also possible to separately control an adjustment right for every individual function, such as adjusting contrast in the Look data set from the electronic device A and adjusting saturation from the electronic device B at the same time.

Description returns to the description of the project management page with reference to Fig. 21. At a stage of registering video data as content, a Look data set for performing Look processing on the content is not set. The Look setting button is a button for setting a Look data set for performing Look processing on content. When the Look data set is set, a transmission request of the Look data set is made from the setting apparatus 400 to the information processing apparatus 100, and the set Look data set is transmitted from the information processing apparatus 100 to an electronic device registered in the project.

The display method setting button is for setting a display method of a display device targeted by content. Since the target display devices may be different even in the same Look, the display method targeted by the content can be set by performing input to the display method setting button for every content. In this example, a display method targeted by content A is set for Rec.709, and a display method targeted by content B, content C, and content D is set to HLG.

Furthermore, in a case where it is desired to change the Look data set already set for the content to the other Look data set, the Look data set can be changed by performing input to the Look setting button of the corresponding content in the project page.

The duplication button is a button for duplicating Look setting, and when input is made to the duplication button, new content in which exactly the same Look as the content corresponding to the duplication button has been set is duplicated. Fig. 21B illustrates an example in which the content D is created in a state of succeeding Look setting of the content B by inputting to the duplication button of the content B. The deletion button is a button for deleting content.

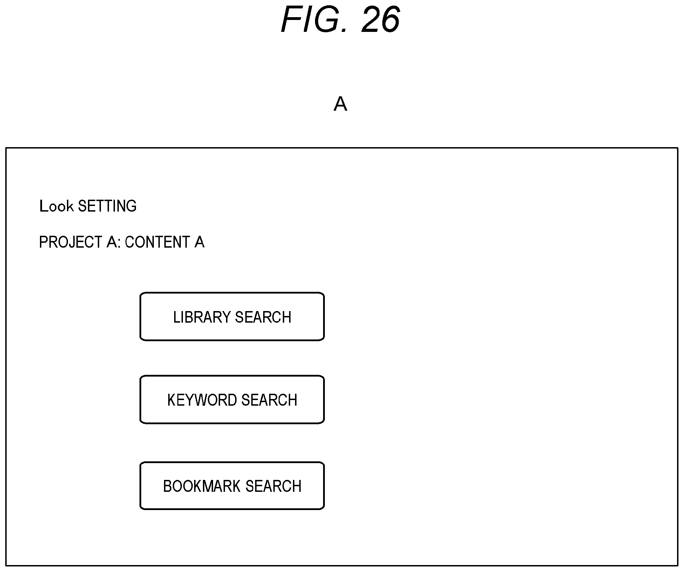

When input is made to the Look setting button, the UI transitions to a Look setting page illustrated in Fig. 26, where a user can search for Look and set a Look data set for performing Look processing on content. When the Look data set is set, a transmission request of the Look data set is made from the setting apparatus 400 to the information processing apparatus 100, and the set Look data set is transmitted from the information processing apparatus 100 to an electronic device registered in the project.

In the Look setting page, a search method of the Look is first presented to the user, and the user selects a desired search method therefrom by input. Examples of the search method include library search, keyword search, and bookmark search. Note that this search is merely an example, and the other search method may be adopted.

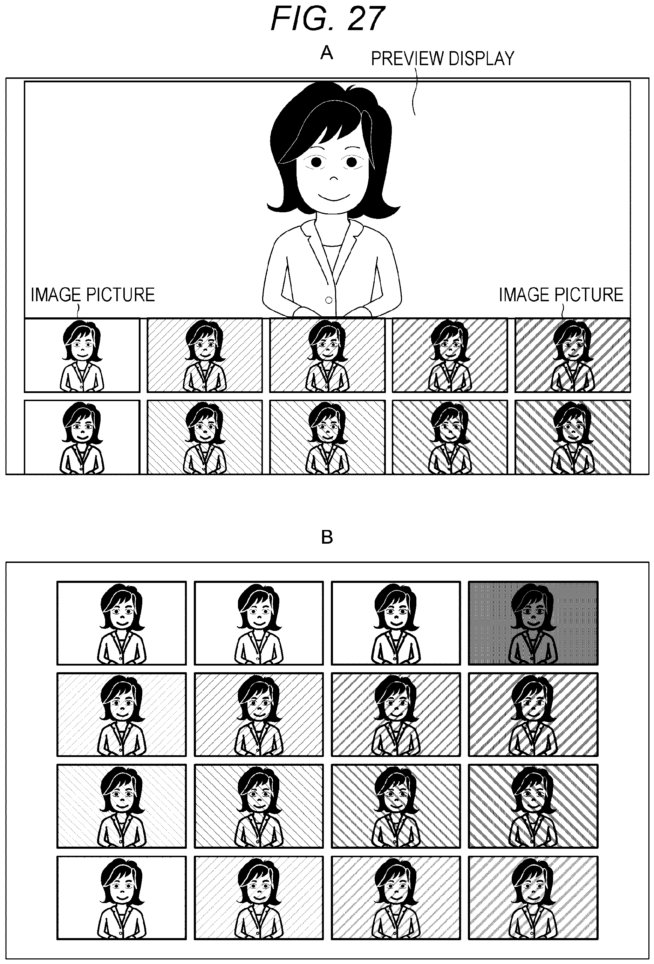

In the library search, as illustrated in Fig. 27A, image pictures to which various Looks are applied are displayed in a tile shape. When an image picture is selected, the image picture is displayed in a large preview, and a Look data set can be selected after confirming Look and the image picture.

In the keyword search, a Look data set can be searched by inputting keywords, such as a movie name, a television program name, and a company name or a product name of a CM using Look desired to be used. In addition, it may be possible to search even with a vague expression that such a Look is wanted, such as a warm feeling or a cold feeling. In order to enable the keyword search with high accuracy, it is necessary for a producer or a production company of the Look data set to include a large number of search keywords in Look basic data. The search keyword may be any information related to the Look, such as a warm/cold/nostalgic image of the Look, a specific movie title or a television program name in which the Look has been used, or a producer name/production company name of the Look.

In the bookmark search, Look that has been used so far, Look that has been favored at the time of the search, and the like are registered in advance as bookmarks, and image pictures of the Look are displayed in a tile shape as illustrated in Fig. 27B. Then, a Look data set is searched from among them. Note that it is preferable that even a Look data set format in which Look adjustment data finely adjusted by a user is set can be registered in a bookmark. In that case, a name of the Look data set can be changed. In addition, a function of analyzing information and history of the bookmark, grasping a preference tendency, and recommending other Looks that are likely to be favored on a database may be provided.

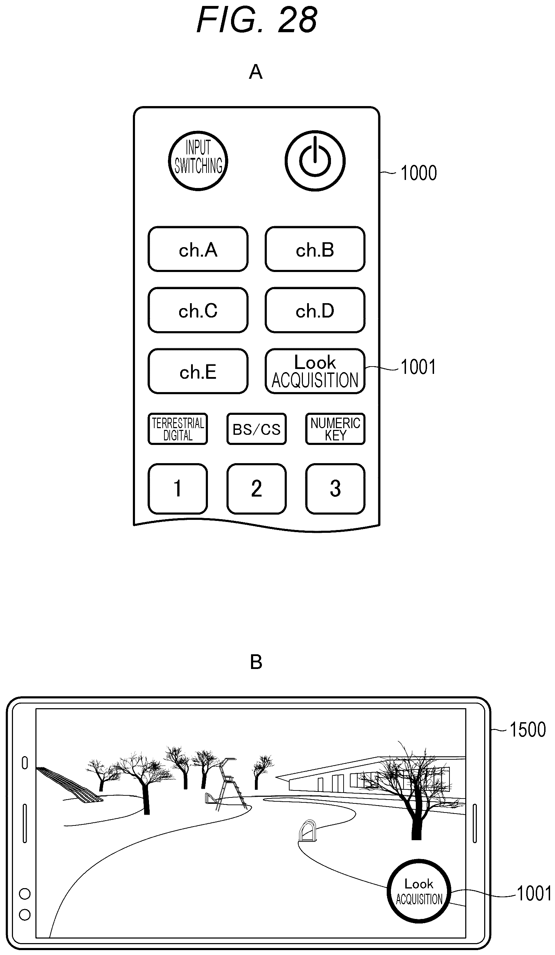

Fig. 28 illustrates a specific example of bookmark registration. For example, a Look acquisition button 1001 is provided in an input device 1000 such as a remote controller attached to a TV or a smartphone illustrated in Fig. 28A or a smartphone 1500 illustrated in Fig. 28B, and in a case where Look is favored when a movie or the like is watched by TV broadcasting, Look data of the movie is registered as a favorite in a bookmark by inputting to the Look acquisition button 1001.

When the input is made to the Look acquisition button 1001, Look acquisition button input information (pressed time, a service name (ground wave, various cable TVs, various video distribution services, etc.), a channel, a program, a work name, etc.) is transmitted to the information processing apparatus 100 via a network connection function of the TV. In the information processing apparatus 100, it is necessary to store in advance, as a database, running time information, content information, and the like of a broadcasted video work, and Look data corresponding to the video work. By associating the information with the Look acquisition button input information, it is possible to add the Look used by the video work being viewed at a moment when the input to the Look acquisition button is performed, to the bookmark of the user. This is not limited to the TV, and for example, in a smartphone, a tablet terminal, or the like, similar Look acquisition can be realized by displaying a Look acquisition button on a video viewing application.

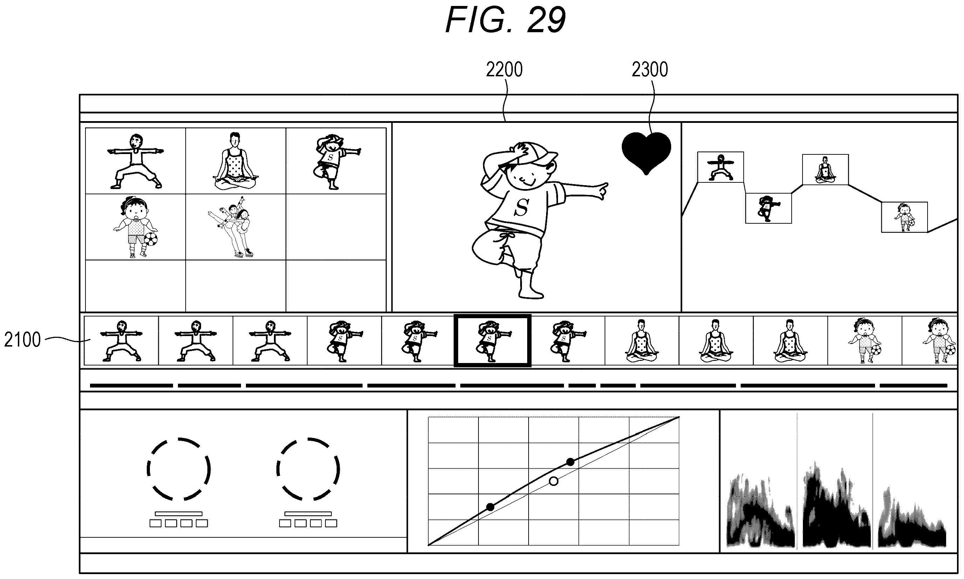

Furthermore, Fig. 29 is an example of a bookmark registration UI of Look in video editing software operating in the editing apparatus 500 or the like. The UI in the video editing software includes at least a timeline display unit 2100 that displays a scene of video data to be processed and a preview display unit 2200 that displays a scene selected on the timeline display unit 2100 as a preview, and a favorite input icon 2300 is provided on the preview display unit 2200. Then, a user selects a scene of which a bookmark of Look is to be registered as a favorite on the timeline display unit 2100, and when the scene is displayed on the preview display unit 2200, the user makes an input to the favorite input icon 2300. Therefore, Look data applied to the scene in the video editing software is registered in the bookmark as the favorite.

Next, a method of generating Look data to be registered in the Look database 150 will be described. A Look data set corresponding to a video work or the like is provided by a content holder (a producer, a right holder, etc. of the video work), and a system operator stores the Look data set in the Look database 150.

Furthermore, for example, there is a case where Look data of a past movie or the like does not exist in a state of being separated from a video work. For such a video work, the video work may be used as input after obtaining a right from a content holder, and an engine that automatically generates Look data by utilizing AI technology or the like may be provided in the information processing apparatus 100.

In addition, a mechanism for paying a reward to a Look right holder according to the number of used Looks, length of a video work created using the Look, and the like may be incorporated. Moreover, a function of registering Look data in the Look database 150 may be disclosed to general users, and an individual may register Look data having his/her own characteristics, promote the same, and obtain a profit.

[2-3. Specific Examples of Use of Information Processing System 10: Real-time Grading]

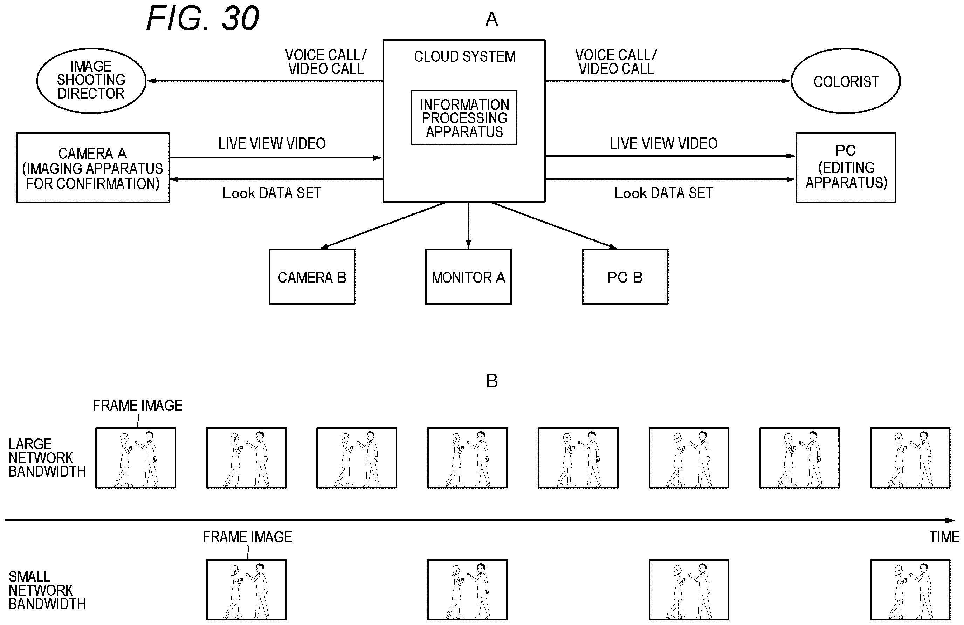

Next, real-time grading at the time of imaging will be described with reference to Fig. 30A. Note that the following description is made merely for usage examples of the information processing system 10, and the present technology is not limited to the following usage examples. Here, a description will be given on the assumption that a cloud system that has a function of the information processing apparatus 100 and a voice call/video call function and can be connected with each electronic device via a network to transmit various data is used.

A live view video (Log video) from a camera A (imaging apparatus for confirmation) is transmitted to a remote personal computer (editing apparatus) in real time by streaming. A colorist can perform grading work with editing software operating on the personal computer while viewing this real-time streaming video.

By a mechanism of the cloud system, Look adjustment data is transmitted to and reflected on a camera B, a monitor A (display apparatus), a personal computer B, or the like at an image shooting site in real time. Furthermore, by using the voice call/video call function on the cloud system, an image shooting director at the site and the colorist at an editing room talk in real time while watching the same video on both sides, it is possible to efficiently perform fine adjustment of Look (real-time grading). Furthermore, contents of the talk may be automatically recorded and converted into text, and managed as history information in association with a project.

The imaging apparatus 200, the editing apparatus 500, and the cloud system at the image shooting site are connected by using the wired or wireless Internet. However, in a case where a bandwidth of the network becomes small for some reason and a live view video cannot be streamed in real time, image quality of a video of one frame is more important than a frame rate for grading adjustment. Therefore, as illustrated in Fig. 30B, dynamic bit rate control by frame dropping is performed instead of dynamic bit rate reduction by image quality degradation that increases intra-frame quantization intensity. In grading, since the image quality of one frame image is more important than the number of frames, a bit rate is adjusted by reducing the number of frames instead of degrading the image quality.

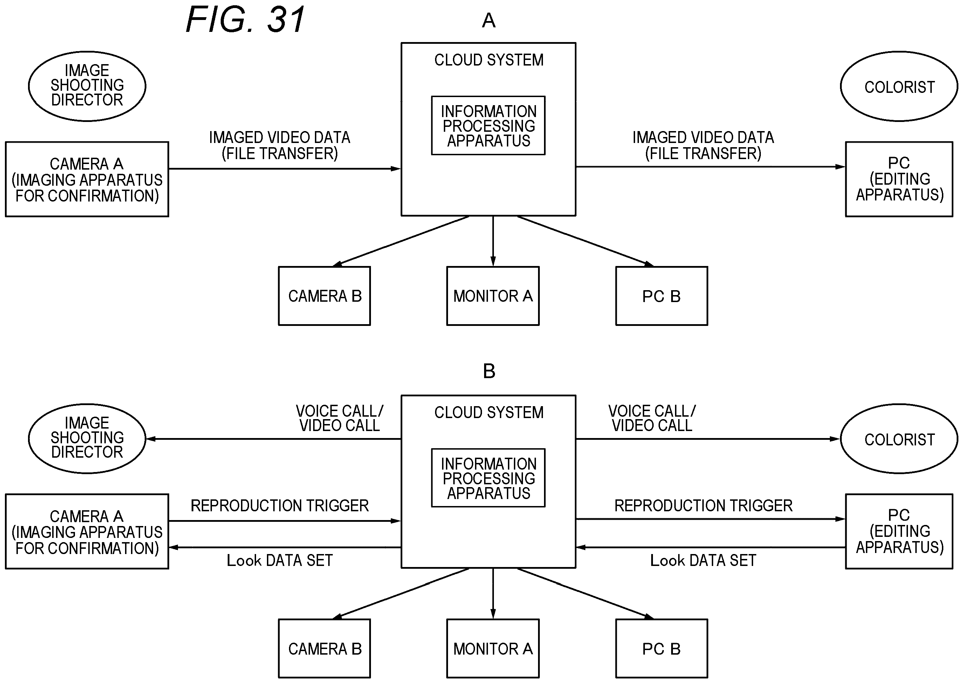

Fig. 31 illustrates an example in which grading is performed in real time by the personal computer A (editing apparatus) using imaged video data imaged by the camera A (imaging apparatus for confirmation) instead of a live view video. Fig. 31A is a diagram illustrating transmission and reception of video data generated by imaging. Furthermore, Fig. 31B is a diagram illustrating transmission and reception of various data other than video data. In this case, the imaged video data is transferred from the camera A to the personal computer A in advance via the cloud system by file transfer protocol (FTP) transfer or the like.

As illustrated in Fig. 31B, when the video data is reproduced on the camera A side, a reproduction trigger signal thereof is immediately sent to the personal computer A via the network and the cloud system, and the video data is reproduced on the personal computer A side almost at the same time as the imaging apparatus 200 for confirmation. It is possible to adjust Look while simultaneously viewing the video with the camera A and the personal computer A, and moreover, talking in real time.

Note that the reproduction trigger can be transmitted not only from the camera A but also from the personal computer A side. By transferring the video data in advance, there is an advantage that frame dropping or the like does not occur even if a network bandwidth decreases during reproduction. Also in the real-time grading using the video data, a reproduced video may be streamed in real time as in Fig. 30, but in this case, frame dropping occurs when the network bandwidth decreases. As illustrated in Fig. 31B, a voice call may be made between the camera A and the personal computer A via the network and the cloud system. Contents of the voice call may be converted into voice data and text data and recorded in association with a project.

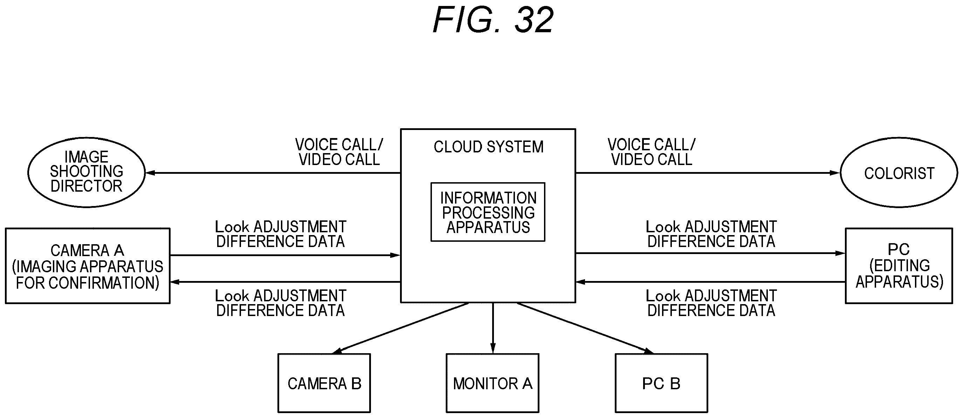

Fig. 32 illustrates an example in which the same video data (sharing the same Look) is graded in a non-master following mode simultaneously by the editing apparatuses 500 of a plurality of persons/a plurality of bases at the time of post-production. For example, different scenes/video data are edited while both sides share the same video data group. Since the other party is notified of the video data being edited and the video data becomes uneditable (locked), the same video data is not edited at the same time.

At the same time, the mechanism described above in Fig. 32 can be used for processing in a case where a plurality of people/a plurality of bases start editing video data. Furthermore, a risk of simultaneous change can be expected to be reduced by performing work while simultaneously connecting voice conversations. The other party can check a state of both grading in real time by viewing a scene video during grading. Since only Look adjustment difference data having a small data amount is transmitted on an event-driven basis, it is possible to reflect the Look adjustment difference data to the other party with low latency.

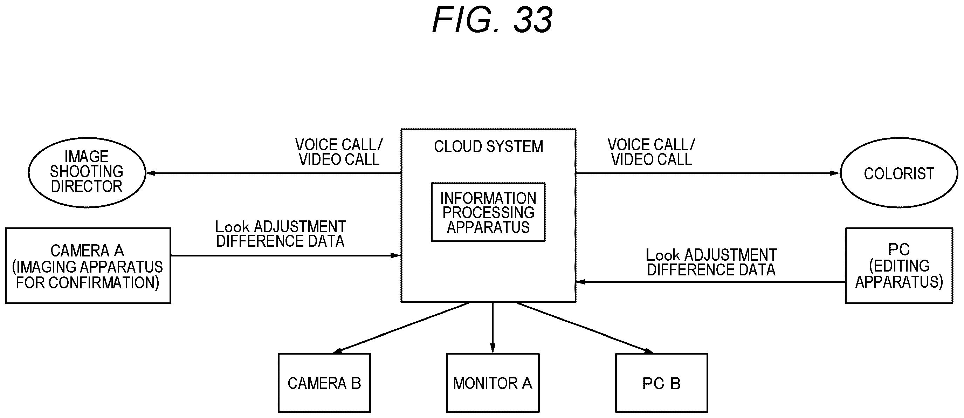

Fig. 33 illustrates an example in which different pieces of video data (separately managed Look data) are graded in a non-master following mode simultaneously at a plurality of persons/a plurality of bases during post-production. A difference from the example of Fig. 32 is that since the video data edited by the plurality of persons/the plurality of bases is separate, a Look data set is separated though Log video data is shared. Therefore, exclusive control is not required for each Look adjustment, and work can be performed completely independently.

Video data, a Look data set, and various other data used in a project are background transferred to the cloud system on an event-driven basis when there is a change. As a result, at the time of editing, editing work can be immediately started using a file on the cloud without media copy or the like. Since the video data has a large data size, it is possible to select whether to always transfer only Proxy or not to perform background transfer at all at the time of imaging. In this case, it is necessary to explicitly connect a medium in which the video data has been stored to the editing apparatus 500 at the time of editing.

The cloud system is basically a system on the premise that it is continuously connected to the Internet, but it is easy to assume that a failure occurs in the network. Video data, a Look data set, and various other data used in a project are periodically and simultaneously stored in a master device (can be distributed to a local device capable of constructing a LAN). When a failure occurs in the Internet, the LAN is immediately configured, and a user can continue work without particularly feeling any change using the locally stored data. The updated data is also stored locally. As soon as the Internet connection is resumed, only difference data of a local work part is uploaded, and it is possible to quickly return to a normal state with database on the Internet side as a master.

The processing according to the present technology is performed as described above. According to the present technology, it is possible to easily perform processing related to Look in video production, and it is possible to quickly and easily obtain and create a Look data set for adapting imaged Look to video data. Furthermore, in a plurality of electronic devices such as the imaging apparatus 200 and the display apparatus 300 used in various places handling the Look, such as an image shooting site and an editing room, it is possible to synchronize the Looks easily and quickly using the Look data set and continue to match the Looks in real time. As a result, efficient video production can be realized even in remote production in which workers are distributed.

<Modified Examples>

In the embodiment, the processing target is video data, but the processing target may be image data.

In the embodiment, the imaging apparatus, the display apparatus, the setting apparatus, and the editing apparatus are described as the electronic device, but any electronic device may be used as long as the electronic device uses data related to Look.

In the embodiment, the Look data set is transmitted from the information processing apparatus 100 to the electronic device such as the imaging apparatus 200, and the electronic device performs processing on the video data with the Look data set. However, the cloud system side may perform processing on the video data using the Look data set.

The present technology can also have the following configurations.

(1) An information processing system including:

an information processing apparatus and at least one electronic device connectable with the information processing apparatus, in which
the information processing apparatus manages a plurality of Look data sets each including Look basic data corresponding to each color expression and Look adjustment data for adjusting the Look basic data.

(2) The information processing system according to (1), in which the information processing apparatus transmits the Look data set to the electronic device according to video data processed by the electronic device.
(3) The information processing system according to (1) or (2), in which the information processing apparatus transmits the Look data set to the electronic device according to a display function of a display device corresponding to the electronic device.
(4) The information processing system according to any one of (1) to (3), in which the Look basic data includes Look component data and display optimization data.
(5) The information processing system according to any one of (1) to (4), in which the electronic device includes a Look processing unit that performs processing on video data on the basis of the Look data set.
(6) The information processing system according to (5), in which the Look processing unit performs Look processing on the video data by using any one or both of the Look component data and the Look adjustment data.

(7) The information processing system according to (5) or (6), in which the Look processing unit performs display optimization processing on the video data by using any one or both of the display optimization data and the Look adjustment data.

(8) The information processing system according to any one of (5) to (7), in which the Look processing unit performs any one or both of pre-adjustment before the Look processing and post-adjustment after the Look processing on the video data by using any one or both of the Look component data and the Look adjustment data.

(9) The information processing system according to any one of (1) to (8), in which the information processing apparatus manages the Look data set as a library, and transmits the Look data set selected by a user from the library to the electronic device.

(10) The information processing system according to any one of (1) to (9), in which the Look basic data includes a keyword, and

the information processing apparatus searches the database on the basis of a keyword provided by a user and transmits the Look data set to the electronic device.

(11) The information processing system according to any one of (1) to (10), in which the information processing apparatus manages the Look data set as a bookmark registered as a favorite by a user in advance, and transmits the Look data set selected by the user from the bookmark to the electronic device.

(12) The information processing system according to any one of (1) to (11), in which in a case where the Look data set is transmitted from the information processing apparatus to one electronic device among a plurality of the electronic devices and the one electronic device performs Look processing, contents of the Look processing are also applied to the other electronic device.

(13) The information processing system according to any one of (1) to (12), in which in a case of adjusting the Look data set, a parameter of the Look basic data is not changed, and contents of adjustment are recorded as the Look adjustment data.

(14) The information processing system according to (13), in which in a case of adjusting the Look data set a plurality of times, contents of first adjustment are recorded as the Look adjustment data, and contents of second and subsequent adjustment are recorded as Look adjustment difference data.

(15) The information processing system according to any one of (1) to (14), in which in a case where adjustment of the Look data set has been executed by a plurality of the electronic devices within a predetermined period, contents of earliest adjustment are recorded as the Look adjustment data.

(16) The information processing system according to (15), in which among the plurality of electronic devices, the other electronic device other than the electronic device that has performed the earliest adjustment is notified that the adjustment of the Look data set cannot be performed.

(17) The information processing system according to any one of (1) to (16), in which the electronic device is an imaging apparatus.

(18) The information processing system according to any one of (1) to (17), in which the electronic device is a display apparatus.

(19) An information processing method including:
managing a plurality of Look data sets each including Look basic data corresponding to each color expression and Look adjustment data for adjusting the Look basic data in an information processing apparatus connectable with at least one electronic device.

(20) An information processing program causing a computer to execute an information processing method including:
managing a plurality of Look data sets each including Look basic data corresponding to each color expression and Look adjustment data for adjusting the Look basic data in an information processing apparatus connectable with at least one electronic device.

REFERENCE SIGNS LIST

| | |
|---|---|
| 10 | Information processing system |
| 100 | Information processing apparatus |
| 150 | Look database |
| 200 | Imaging apparatus |
| 300 | Display apparatus |

## EP 4 203 467 A1

**Claims**

1.  An information processing system comprising:

    an information processing apparatus and at least one electronic device connectable with the information processing apparatus, wherein
    the information processing apparatus manages a plurality of Look data sets each including Look basic data corresponding to each color expression and Look adjustment data for adjusting the Look basic data.

2.  The information processing system according to claim 1, wherein
    the information processing apparatus transmits the Look data set to the electronic device according to video data processed by the electronic device.

3.  The information processing system according to claim 1, wherein
    the information processing apparatus transmits the Look data set to the electronic device according to a display function of a display device corresponding to the electronic device.

4.  The information processing system according to claim 1, wherein
    the Look basic data includes Look component data and display optimization data.

5.  The information processing system according to claim 1, wherein
    the electronic device includes a Look processing unit that performs processing on video data on a basis of the Look data set.

6.  The information processing system according to claim 5, wherein
    the Look processing unit performs Look processing on the video data by using any one or both of the Look component data and the Look adjustment data.

7.  The information processing system according to claim 5, wherein
    the Look processing unit performs display optimization processing on the video data by using any one or both of the display optimization data and the Look adjustment data.

8.  The information processing system according to claim 5, wherein
    the Look processing unit performs any one or both of pre-adjustment before the Look processing and post-adjustment after the Look processing on the video data by using any one or both of the Look component data and the Look adjustment data.

9.  The information processing system according to claim 1, wherein
    the information processing apparatus manages the Look data set as a library, and transmits the Look data set selected by a user from the library to the electronic device.

10. The information processing system according to claim 1, wherein

    the Look basic data includes a keyword, and
    the information processing apparatus searches the database on a basis of a keyword provided by a user and transmits the Look data set to the electronic device.

11. The information processing system according to claim 1, wherein
    the information processing apparatus manages the Look data set as a bookmark registered as a favorite by a user in advance, and transmits the Look data set selected by the user from the bookmark to the electronic device.

12. The information processing system according to claim 1, wherein
    in a case where the Look data set is transmitted from the information processing apparatus to one electronic device among a plurality of the electronic devices and the one electronic device performs Look processing, contents of the Look processing are also applied to the other electronic device.

13. The information processing system according to claim 1, wherein
    in a case of adjusting the Look data set, a parameter of the Look basic data is not changed, and contents of adjustment are recorded as the Look adjustment data.

14. The information processing system according to claim 13, wherein
in a case of adjusting the Look data set a plurality of times, contents of first adjustment are recorded as the Look adjustment data, and contents of second and subsequent adjustment are recorded as Look adjustment difference data.

15. The information processing system according to claim 1, wherein
in a case where adjustment of the Look data set has been executed by a plurality of the electronic devices within a predetermined period, contents of earliest adjustment are recorded as the Look adjustment data.

16. The information processing system according to claim 15, wherein
among the plurality of electronic devices, the other electronic device other than the electronic device that has performed the earliest adjustment is notified that the adjustment of the Look data set cannot be performed.

17. The information processing system according to claim 1, wherein
the electronic device is an imaging apparatus.

18. The information processing system according to claim 1, wherein
the electronic device is a display apparatus.

19. An information processing method comprising:
managing a plurality of Look data sets each including Look basic data corresponding to each color expression and Look adjustment data for adjusting the Look basic data in an information processing apparatus connectable with at least one electronic device.

20. An information processing program causing a computer to execute an information processing method comprising:
managing a plurality of Look data sets each including Look basic data corresponding to each color expression and Look adjustment data for adjusting the Look basic data in an information processing apparatus connectable with at least one electronic device.

## FIG. 1

CLOUD SYSTEM

INFORMATION PROCESSING APPARATUS ~100

Look DATABASE ~150

10

NETWORK

200 IMAGING APPARATUS (CAMERA OPERATOR)

300 DISPLAY APPARATUS

200 IMAGING APPARATUS (CAMERA OPERATOR)

300 DISPLAY APPARATUS

600 LIGHTING APPARATUS

400 SETTING APPARATUS (DIRECTOR ETC.)

500 EDITING APPARATUS (COLORIST)

500 EDITING APPARATUS (EDITOR ETC.)

IMAGE SHOOTING SITE

EDITING ROOM

EP 4 203 467 A1

# FIG. 2

LAN

WAN

A

```
IMAGING
APPARATUS A
```
200

```
SETTING
APPARATUS
```
400

```
IMAGING
APPARATUS B
```
200

```
IMAGING
APPARATUS C
```
200

```
DISPLAY
APPARATUS A
```
300

```
DISPLAY
APPARATUS B
```
300

```
DISPLAY
APPARATUS C
```
300

WAN

```
IMAGING
APPARATUS A
```
200

```
DISPLAY
APPARATUS A
```
300

WAN

WAN

```
IMAGING
APPARATUS B
```
200

```
DISPLAY
APPARATUS B
```
300

WAN

WAN

```
IMAGING
APPARATUS C
```
200

```
DISPLAY
APPARATUS C
```
300

WAN

WAN

```
SETTING
APPARATUS
```
400

B

FIG. 3

IMAGE SHOOTING SITE

200 — IMAGING APPARATUS (FOR CONFIRMATION)

200 — IMAGING APPARATUS

600 — LIGHTING APPARATUS

300 — DISPLAY APPARATUS

VIDEO DATA

Look DATA SET

Look DATA SET

Look DATA SET (APPROPRIATE LIGHTING SETTING (BRIGHTNESS, COLOR TEMPERATURE, ETC.))

VIDEO DATA

IMAGING APPARATUS

200

Look DATA SET

Look DATA SET

INFORMATION PROCESSING APPARATUS

100

400 — SETTING APPARATUS

·TRANSMISSION REQUEST OF Look DATA SET
·CHANGE, ADJUSTMENT OF Look DATA SET (ONSET GRADING)

Look DATA SET

500 — EDITING APPARATUS

·REAL-TIME PREVIEW
·REAL-TIME COLOR CORRECTION/GRADING

EDITING ROOM A

Look DATA SET

500 — EDITING APPARATUS

·REAL-TIME PREVIEW
·REAL-TIME COLOR CORRECTION/GRADING

EDITING ROOM B

EP 4 203 467 A1

*FIG. 4*

A

Look DATA SET
- Look BASIC DATA
  - Look COMPONENT DATA
  - DISPLAY OPTIMIZATION DATA
- Look ADJUSTMENT DATA

B

VIDEO DATA (RGB) → Look COMPONENT DATA 3D LUT → VIDEO DATA (RGB) → ODT 3D LUT → VIDEO DATA (RGB)

C

Look BASIC DATA

Look ID

Look DATA BODY
(3D LUT DATA, ODT, ETC.)

Look NAME

Look FEATURE INFORMATION

SEARCH KEYWORD

RECOMMENDED EXPOSURE
CONDITION

Look ADJUSTMENT DATA

Look ADJUSTMENT ID

CREATION DATE AND TIME
INFORMATION

TARGET DISPLAY DEVICE

ADJUSTMENT DATA
  (CDL PARAMETER,
  3D LUT DATA, ETC.)

PROCESSING POSITION
INFORMATION

ADJUSTMENT DIFFERENCE DATA

SCENE DATA

SCENE ID

SCENE VIDEO FILE NAME

IMAGING DATE AND TIME
INFORMATION

BELONGING PROJECT NAME

CAMERA ID

CAMERA INFORMATION
  MODEL
  INSTALLATION POSITION
  VARIOUS SETTING
  INFORMATION

LIGHTING INFORMATION
  MODEL
  INSTALLATION POSITION
  BRIGHTNESS,
  COLOR TEMPERATURE
  SPECTRAL DISTRIBUTION

# FIG. 5

## A

PROJECT
- SCENE #1 ── Look ADJUSTMENT DATA #A1 ... Look ADJUSTMENT DATA #B1
- SCENE #2 ── Look ADJUSTMENT DATA #A1 ... Look ADJUSTMENT DATA #B1
- SCENE #3 ── Look ADJUSTMENT DATA #A1 ... Look ADJUSTMENT DATA #B1
- SCENE #4 ── Look ADJUSTMENT DATA #A2 ... Look ADJUSTMENT DATA #B1
- SCENE #5 ── Look ADJUSTMENT DATA #A2 ... Look ADJUSTMENT DATA #B2
- SCENE #6 ── Look ADJUSTMENT DATA #A3 ... Look ADJUSTMENT DATA #B2

CONTENT A
BASE:
Look BASIC DATA A

CONTENT B
BASE:
Look BASIC DATA B

## B

Look DATA SET MANAGEMENT TABLE

| BASE / SCENE ID | CONTENT A BASE: Look BASIC DATA A | CONTENT B BASE: Look BASIC DATA B +Look ADJUSTMENT DATA #B0 | CONTENT C BASE: Look BASIC DATA C |
|---|---|---|---|
| 1 | #A1 | NONE (DEFAULT) | #C1 |
| 2 | #A1 | NONE | #C2 |
| 3 | #A1 | NONE | #C2 |
| 4 | #A2 | #B1 | #C3 |
| 5 | #A2 | #B2 | #C4 |
| 6 | #A3 | #B2 | #C4 |
| ⋮ | ⋮ | ⋮ | ⋮ |

# FIG. 6

```
        101              102              103
   ┌──────────┐    ┌──────────┐    ┌──────────┐
   │ CONTROL  │    │ STORAGE  │    │INTERFACE │
   │  UNIT    │    │  UNIT    │    │          │
   └────┬─────┘    └────┬─────┘    └────┬─────┘
        ↕                ↕                ↕
 ◄══════════════════════════════════════════════►
                      BUS
        ↕                ↕                ↕
   ┌──────────┐    ┌──────────┐    ┌──────────┐
   │  Look    │    │USER/PROJECT│  │  SEARCH  │
   │ DATABASE │    │MANAGEMENT │   │   UNIT   │
   │          │    │   UNIT    │   │          │
   └──────────┘    └──────────┘    └──────────┘
       150             105             104
```

100

## FIG. 7

200

209 — INTERFACE

Look DATA SET INCLUDED
IN IMAGING APPARATUS

Look DATA SET

| 201 | 202 | | 203 | | 204 | 205 | | 206 | | 208 |

IMAGING UNIT → CORRECTION/ WB PROCESSING UNIT → Bayer → COLOR SEPARATION UNIT → RGB → FIRST CONVERSION PROCESSING UNIT → SECOND CONVERSION PROCESSING UNIT → Log MATERIAL → Look PROCESSING UNIT → DISPLAY DEVICE

RGB

LOG VIDEO

VIDEO OUTPUT E.G.) HD-SDI

207 — ENCODING/ DECODING UNIT

209

STREAMING ← INTERFACE → OUTPUT TO STORAGE MEDIUM

EP 4 203 467 A1

30

# FIG. 8

- INTERFACE — 304
- 300
- Look DATA SET INCLUDED IN DISPLAY APPARATUS
- Look DATA SET
- 301
- E.G.) Log VIDEO
- VIDEO DATA (E.G.: HD-SDI)
- Look PROCESSING UNIT
- 302
- DISPLAY PROCESSING UNIT
- 303
- DISPLAY DEVICE
- E.G.) VIDEO DATA CORRESPONDING TO Rec.709

# FIG. 9

EP 4 203 467 A1

400

401

402

403

| CONTROL UNIT | STORAGE UNIT | INPUT UNIT |

BUS

| INTERFACE | DISPLAY UNIT |

405

404

# FIG. 10

500

| 501 | 502 | 503 |
|---|---|---|
| CONTROL UNIT | STORAGE UNIT | INPUT UNIT |

BUS

| Look PROCESSING UNIT | INTERFACE | DISPLAY UNIT |
|---|---|---|
| 505 | 505 | 504 |

EP 4 203 467 A1

## FIG. 11

**PREPARATION STAGE**

IMAGING PREPARATION

SCENARIO DETERMINATION

IMAGING SETTING CANDIDATE DETERMINATION

Look CANDIDATE DETERMINATION

---

**IMAGING STAGE (IMAGE SHOOTING SITE)**

INSTALLATION → SETTING → IMAGING → CONFIRMATION/ BACKUP

FINAL DETERMINATION OF Look ACCORDING TO IMAGE SHOOTING SITE

---

**EDITING STAGE (POST-PRODUCTION) (EDITING ROOM)**

CUT EDITING → COLOR CORRECTION GRADING

PROCESSING BASED ON Look DETERMINED AT IMAGE SHOOTING SITE

EP 4 203 467 A1

FIG. 12

*FIG. 13*

EP 4 203 467 A1

## FIG. 14

```
VIDEO DATA
STANDARD Log/          →   PRE-        →   Look         →   DISPLAY        →   POST-        →   Look-APPLIED
STANDARD COLOR GAMUT       ADJUSTMENT      COMPONENT        OPTIMIZATION       ADJUSTMENT       VIDEO DATA
(E.G.: S-Log3/S-Gamut3)                    PROCESSING       PROCESSING
```

# FIG. 15

## A

VIDEO DATA

R → [PRE-PROCESSING (E.G.: CDL PROCESSING)] → R
G → → G
B → → B

↑ Look ADJUSTMENT DATA (PRE)

R → [Look COMPONENT PROCESSING (E.G.: 3D LUT PROCESSING)] → R
G → → G
B → → B

↑ Look BASIC DATA

R → [POST-PROCESSING (E.G.: CDL PROCESSING)] → R
G → → G  Look-APPLIED VIDEO DATA
B → → B

↑ Look ADJUSTMENT DATA (POST)

## B

VIDEO DATA

R → [PRE-PROCESSING (3D LUT PROCESSING)] → R
G → → G
B → → B

↑ 3D LUT DATA

R → [Look COMPONENT PROCESSING (3D LUT PROCESSING)] → R
G → → G
B → → B

↑ 3D LUT DATA

R → [POST-PROCESSING (3D LUT PROCESSING)] → R
G → → G  Look-APPLIED VIDEO DATA
B → → B

↑ 3D LUT DATA

*FIG. 16*

PIXEL DATA Rin → In

Rslope → slope
Roffset → offset
Rpower → power

FIX IN FRAME UNITS

Out = (In × slope + offset)^power

Out → Rout

PIXEL DATA Gin → In

Gslope → slope
Goffset → offset
Gpower → power

FIX IN FRAME UNITS

Out = (In × slope + offset)^power

Out → Gout

PIXEL DATA Bin → In

Bslope → slope
Boffset → offset
Bpower → power

FIX IN FRAME UNITS

Out = (In × slope + offset)^power

Out → Bout

Look ADJUSTMENT DATA

FIG. 17

# FIG. 18

Look BASIC DATA A

+

| Look ADJUSTMENT DATA #A1-0 Rec.709 CDL PRE-PROCESSING | → | Look ADJUSTMENT DATA #A1-1 Rec.709 CDL PRE-PROCESSING | → | Look ADJUSTMENT DATA #A1-2 Rec.709 CDL POST-PROCESSING | → | Look ADJUSTMENT DATA #A1-3 HLG CDL PRE-PROCESSING | → | Look ADJUSTMENT DATA #A1-4 HLG CDL POST-PROCESSING | → | Look ADJUSTMENT DATA #A1-5 HLG 3D LUT Look COMPONENT PROCESSING | → | Look ADJUSTMENT DATA #A1-6 Rec.709 CDL POST-ADJUSTMENT | → | Look ADJUSTMENT DATA #A1-7 HLG CDL POST-ADJUSTMENT EOL |

|                                       | PRE-PROCESSING | Look COMPONENT PROCESSING | POST-PROCESSING |
|---|---|---|---|
| DISPLAY DEVICE (DISPLAY METHOD: Rec.709) | Look ADJUSTMENT DATA #A1-0 Rec.709 CDL PRE-PROCESSING  +  Look ADJUSTMENT DATA #A1-1 Rec.709 CDL PRE-PROCESSING | Look BASIC DATA A | Look ADJUSTMENT DATA #A1-2 Rec.709 CDL POST-PROCESSING  +  Look ADJUSTMENT DATA #A1-6 Rec.709 CDL POST-PROCESSING |
| DISPLAY DEVICE (DISPLAY METHOD: HLG) | Look ADJUSTMENT DATA #A1-3 HLG CDL PRE-PROCESSING | Look ADJUSTMENT DATA #A1-5 HLG 3D LUT Look COMPONENT PROCESSING | Look ADJUSTMENT DATA #A1-4 HLG CDL POST-PROCESSING  +  Look ADJUSTMENT DATA #A1-7 HLG CDL POST-ADJUSTMENT EOL |

EP 4 203 467 A1

# FIG. 19

INFORMATION PROCESSING APPARATUS (CLOUD SYSTEM) ~100

Look DATABASE ~150

33x33x33
3D LUT DATA

SMALL 3D LUT CONVERSION
SPECIAL CONVERSION
ENCRYPTION

500

EDITING APPARATUS

3D LUT PROCESSING

OUTPUT FOR MONITORING

200A

IMAGING APPARATUS (LOW IMAGE QUALITY MONITORING)

THINNING    17x17x17    SMALL 3D LUT PROCESSING

OUTPUT FOR MONITORING

200B

IMAGING APPARATUS (HIGH IMAGE QUALITY MONITORING)

ENCRYPTION DECOMPRESSION    1DLUT PROCESSING/ SMALL 3D LUT PROCESSING/ MATRIX CONVERSION

OUTPUT FOR MONITORING

EP 4 203 467 A1

# FIG. 20

A

VIDEO DATA BEFORE
Look PROCESSING → | 33x33x33
3D LUT
PROCESSING | → Look-APPLIED
VIDEO DATA

B

VIDEO DATA BEFORE
Look PROCESSING → | 3x3
MATRIX | → | 3x3
MATRIX | → | 17x17x17
3D LUT
PROCESSING | → | 1D LUT
PROCESSING | → Look-APPLIED
VIDEO DATA

# FIG. 21

A

```
                                                    ┌─────────────────┐
                                                    │     PROJECT     │
                                                    │  NEW CREATION   │
                                                    └─────────────────┘
USER: XX COMPANY

    │
    ├─────    PROJECT A    [ DELETE ]
    │
    ├─────    PROJECT B    [ DELETE ]
    │              ⋮
    │
```

B

```
        ┌──────────────────────┐   ┌─────────────────┐
        │  DEVICE REGISTRATION │   │     CONTENT     │
        └──────────────────────┘   │  NEW ADDITION   │
                                    └─────────────────┘
PROJECT A
                                              TARGET DISPLAY
    CURRENT
    ├── ☑ CONTENT A  — Look:Look A        [Look SETTING] [ 709 ] [DUPLICATE] [DELETE]

    ├── ☐ CONTENT B  — Look:Look B+#B0    [Look SETTING] [ HLG ] [DUPLICATE] [DELETE]

    ├── ☐ CONTENT C  — Look:NOT SET       [Look SETTING] [ HLG ] [DUPLICATE] [DELETE]

    ├── ☐ CONTENT D  — Look:Look B+#B0    [Look SETTING] [ HLG ] [DUPLICATE] [DELETE]
    │         ⋮
```

# FIG. 22

# FIG. 23

**A**

SIMULTANEOUS IMAGING BUTTON

MODE SWITCHING BUTTON

| PROJECT A | ADDITION | MASTER FOLLOWING MODE | Rec Start |

| CAMERA A | CAMERA B | CAMERA C | MONITOR A | MONITOR B | MONITOR C | PC A | PC B | SMARTPHONE A |
|---|---|---|---|---|---|---|---|---|
| ● | △ | | | | | | ■ | |
| ON | ON | OFF | ON | ??? | ON | ON | OFF | ON |
| 709 | 709 | OFF | HLG | | HLG | sRGB | | DCI-P3 |
| DELETE | DELETE | DELETE | DELETE | DELETE | DELETE | DELETE | DELETE | DELETE |

**B**

SIMULTANEOUS IMAGING BUTTON

MODE SWITCHING BUTTON

APERTURE: F2.8x (F4)

SS: 1/200x (1/400)

| ...CT A | ADDITION | NON-MASTER FOLLOWING MODE | Rec Stop |

| CAMERA A | CAMERA B | CAMERA C | MONITOR A | MONITOR B | MONITOR C | PC A | PC B | SMARTPHONE A |
|---|---|---|---|---|---|---|---|---|
| ● | △ | | | | | | ■ | |
| ON | ON | OFF | ON | ??? | ON | ON | OFF | ON |
| 709 | 709 | OFF | HLG | | HLG | sRGB | | DCI-P3 |
| DELETE | DELETE | DELETE | DELETE | DELETE | DELETE | DELETE | DELETE | DELETE |

# FIG. 24

# FIG. 25

A

B

*FIG. 26*

A

Look SETTING

PROJECT A: CONTENT A

LIBRARY SEARCH

KEYWORD SEARCH

BOOKMARK SEARCH

# FIG. 27

A

PREVIEW DISPLAY

IMAGE PICTURE

IMAGE PICTURE

B

# FIG. 28

A

B

# FIG. 29

EP 4 203 467 A1

# FIG. 30

A

IMAGE SHOOTING DIRECTOR

← VOICE CALL/ VIDEO CALL

CLOUD SYSTEM

INFORMATION PROCESSING APPARATUS

VOICE CALL/ VIDEO CALL →

COLORIST

CAMERA A (IMAGING APPARATUS FOR CONFIRMATION)

LIVE VIEW VIDEO →

Look DATA SET

LIVE VIEW VIDEO →

Look DATA SET

PC (EDITING APPARATUS)

CAMERA B

MONITOR A

PC B

B

FRAME IMAGE

LARGE NETWORK BANDWIDTH

TIME

FRAME IMAGE

SMALL NETWORK BANDWIDTH

EP 4 203 467 A1

# FIG. 31

## A

CLOUD SYSTEM

INFORMATION PROCESSING APPARATUS

IMAGE SHOOTING DIRECTOR

CAMERA A (IMAGING APPARATUS FOR CONFIRMATION)

IMAGED VIDEO DATA (FILE TRANSFER) →

IMAGED VIDEO DATA (FILE TRANSFER) →

COLORIST

PC (EDITING APPARATUS)

CAMERA B          MONITOR A          PC B

## B

CLOUD SYSTEM

INFORMATION PROCESSING APPARATUS

VOICE CALL/ VIDEO CALL

VOICE CALL/ VIDEO CALL

IMAGE SHOOTING DIRECTOR

COLORIST

CAMERA A (IMAGING APPARATUS FOR CONFIRMATION)

REPRODUCTION TRIGGER →

REPRODUCTION TRIGGER →

PC (EDITING APPARATUS)

Look DATA SET

Look DATA SET

CAMERA B          MONITOR A          PC B

EP 4 203 467 A1

# FIG. 32

IMAGE SHOOTING DIRECTOR

VOICE CALL/ VIDEO CALL

CLOUD SYSTEM

INFORMATION PROCESSING APPARATUS

VOICE CALL/ VIDEO CALL

COLORIST

CAMERA A (IMAGING APPARATUS FOR CONFIRMATION)

Look ADJUSTMENT DIFFERENCE DATA

Look ADJUSTMENT DIFFERENCE DATA

Look ADJUSTMENT DIFFERENCE DATA

Look ADJUSTMENT DIFFERENCE DATA

PC (EDITING APPARATUS)

CAMERA B

MONITOR A

PC B

## FIG. 33

IMAGE SHOOTING DIRECTOR

← VOICE CALL/ VIDEO CALL

CLOUD SYSTEM

INFORMATION PROCESSING APPARATUS

VOICE CALL/ VIDEO CALL →

COLORIST

CAMERA A (IMAGING APPARATUS FOR CONFIRMATION)

Look ADJUSTMENT DIFFERENCE DATA →

Look ADJUSTMENT DIFFERENCE DATA ←

PC (EDITING APPARATUS)

CAMERA B

MONITOR A

PC B

EP 4 203 467 A1

<div align="center">

**INTERNATIONAL SEARCH REPORT**

</div>

| International application No. |
| --- |
| **PCT/JP2021/029150** |

**A.  CLASSIFICATION OF SUBJECT MATTER**

  *H04N 9/64*(2006.01)i; *H04N 5/222*(2006.01)i; *H04N 5/232*(2006.01)i
  FI:  H04N9/64 Z; H04N5/222; H04N5/232 030; H04N5/232 290

According to International Patent Classification (IPC) or to both national classification and IPC

**B.  FIELDS SEARCHED**

Minimum documentation searched (classification system followed by classification symbols)

  H04N9/64; H04N5/222; H04N5/232

Documentation searched other than minimum documentation to the extent that such documents are included in the fields searched

  Published examined utility model applications of Japan 1922-1996
  Published unexamined utility model applications of Japan 1971-2021
  Registered utility model specifications of Japan 1996-2021
  Published registered utility model applications of Japan 1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2011-66885 A (CANON INC.) 31 March 2011 (2011-03-31)<br>    paragraphs [0001], [0008], [0013]-[0021], [0042], [0043], [0069]-[0072], [0074], [0075],<br>    [0079], [0109]-[0111], fig. 1, 2, 6, 16 | 1, 5-6, 17-18, 19, 20 |
| Y |  | 2-4, 7-16 |
| Y | JP 2002-342048 A (RICOH CO., LTD.) 29 November 2002 (2002-11-29)<br>    paragraphs [0001], [0037], [0038], [0047]-[0055], fig. 1, 2 | 2,10 |
| Y | JP 2005-24654 A (TOPPAN PRINTING CO., LTD.) 27 January 2005 (2005-01-27)<br>    claim 1, paragraphs [0001], [0019]-[0024] | 3 |
| Y | JP 2014-233064 A (FUJIFILM CORP.) 11 December 2014 (2014-12-11)<br>    paragraphs [0001], [0005], [0006], [0009], [0014], [0078]-[0083], [0112], , fig. 3, 7 | 4, 7-8, 12 |
| Y | JP 2015-514367 A (THOMSON LICENSING) 18 May 2015 (2015-05-18)<br>    paragraphs [0001], [0002], [0010], [0011], fig. 12 | 9 |
| Y | JP 2009-37405 A (CANON INC.) 19 February 2009 (2009-02-19)<br>    claim 1, paragraphs [0001], [0007], fig. 19 | 11 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2021** | **09 November 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2021/029150** |

## C.    DOCUMENTS CONSIDERED TO BE RELEVANT

| Category* | Citation of document, with indication, where appropriate, of the relevant passages | Relevant to claim No. |
|---|---|---|
| Y | JP 2006-129508 A (CANON INC.) 18 May 2006 (2006-05-18)<br>paragraphs [0001], [0048]-[0052], [0068]-[0070], [0078], fig. 6, 11 | 13-14 |
| Y | JP 2017-225085 A (OLYMPUS CORP.) 21 December 2017 (2017-12-21)<br>paragraphs [0001], [0011], [0079], [0083] | 15-16 |

Form PCT/ISA/210 (second sheet) (January 2015)

INTERNATIONAL SEARCH REPORT

Information on patent family members

International application No.

**PCT/JP2021/029150**

| Patent document cited in search report | | | Publication date (day/month/year) | Patent family member(s) | | | Publication date (day/month/year) |
|---|---|---|---|---|---|---|---|
| JP | 2011-66885 | A | 31 March 2011 | (Family: none) | | | |
| JP | 2002-342048 | A | 29 November 2002 | (Family: none) | | | |
| JP | 2005-24654 | A | 27 January 2005 | (Family: none) | | | |
| JP | 2014-233064 | A | 11 December 2014 | (Family: none) | | | |
| JP | 2015-514367 | A | 18 May 2015 | US<br>paragraphs [0002], [0003], [0014], [0015], fig. 2<br>WO<br>EP<br>CN<br>KR | 2015/0009227<br><br><br>2013/147925<br>2832088<br>104205795<br>10-2014-0146592 | A1<br><br><br>A1<br>A<br>A<br>A | |
| JP | 2009-37405 | A | 19 February 2009 | (Family: none) | | | |
| JP | 2006-129508 | A | 18 May 2006 | (Family: none) | | | |
| JP | 2017-225085 | A | 21 December 2017 | US<br>paragraphs [0002], [0021], [0091], [0095]<br>CN | 2017/0366733<br><br><br>107529000 | A1<br><br><br>A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014233064 A
- JP 2012231459 A